# EUROPEAN PATENT APPLICATION

(11) **EP 2 767 773 A1**
(43) Date of publication of application: **20.08.2014**
(21) Application number: 12836201.9
(22) Date of filing: 28.09.2012
(51) Int. Cl.: F24F 5/00, F24F 11/02, F24H 1/00, F25B 1/00, F25B 5/00, F25B 5/04, F25B 6/04

(54) **HOT-WATER-SUPPLYING, AIR-CONDITIONING SYSTEM**

(30) Priority: 30.09.2011 JP 2011216736; 28.12.2011 JP 2011289974
(71) Applicant: Daikin Industries, Ltd., Osaka 530-8323 (JP)
(72) Inventor: FURUI, Shuji, Osaka 530-8323 (JP); MATSUI, Nobuki, Osaka 530-8323 (JP)
(74) Representative: HOFFMANN EITLE
(86) International application number: PCT/JP2012/006252
(87) International publication number: WO 2013/046720

(57) **Abstract**

In order to reduce the running cost for a hot water supply air conditioning system, the hot water supply air conditioning system (10) performs a first cold-storage operation, a second cold-storage operation, and a cold-used air-cooling operation. In the first cold-storage operation, a hot-water-supply-side heat exchanger (26) serves as a condenser, and a thermal-storage-side heat exchanger (31) serves as an evaporator. Moreover, a hot water supplier (70) heats water of a hot water storage tank (71), and a thermal storage (90) stores cold thermal energy in a thermal storage tank (91). In the second cold-storage operation, a heat-source-side heat exchanger (21) serves as a condenser, and the thermal-storage-side heat exchanger (31) serves as an evaporator. Moreover, the thermal storage (90) stores cold thermal energy in the thermal storage tank (91). In the cold-used air-cooling operation, the hot water supply air conditioning system (10) cools room air using cold thermal energy stored in the thermal storage tank (91).

## Description

### TECHNICAL FIELD

The present disclosure relates to a hot water supply air conditioning system which includes a hot water supplier, a thermal storage, and a refrigerant circuit and which is configured to perform a hot water supply using the hot water supplier and to perform an air-cooling operation using cold thermal energy stored in the thermal storage.

### BACKGROUND ART

Conventionally, a hot water supply air conditioning system has been known, which includes a refrigerant circuit configured to perform a refrigeration cycle, a hot water supplier, and a thermal storage. Patent Document 1 discloses the hot water supply air conditioning system of this type. The hot water supply air conditioning system disclosed in Patent Document 1 will be described herein.

The refrigerant circuit of Patent Document 1 includes a first heat exchanger serving as a radiator, and a second heat exchanger serving as an evaporator. The first heat exchanger is connected to a hot water storage tank of the hot water supplier, and is configured to heat water of the hot water storage tank with refrigerant. The second heat exchanger is connected to a thermal storage tank of the thermal storage, and is configured to cool a thermal storage medium of the thermal storage tank with refrigerant. Refrigerant circulating through the refrigerant circuit uses heat absorbed from the thermal storage medium of the thermal storage tank to heat water of the hot water storage tank. Thus, in the hot water supply air conditioning system of Patent Document 1, cold thermal energy obtained by a water-heating operation for heating water of the hot water storage tank is stored in the thermal storage tank. The hot water supply air conditioning system is operated during the midnight during which the cost for electricity is low.

In the hot water supply air conditioning system of Patent Document 1, an air cooler is connected to the thermal storage tank. The air cooler uses cold thermal energy stored in the thermal storage tank during the midnight to cool room air during the day. Thus, power required for cooling room air during the day decreases as compared to the case where cold thermal energy of the thermal storage tank is not used. The hot water supply air conditioning system of Patent Document 1 performs such an operation to reduce the cost required for cooling room air.

### CITATION LIST

### PATENT DOCUMENT

PATENT DOCUMENT 1: Japanese Unexamined Patent Publication No. 2005-257127

### SUMMARY OF THE INVENTION

### TECHNICAL PROBLEM

Typically, the amount of cold thermal energy obtained by the water-heating operation during the midnight is less than the amount of cold thermal energy required for the air-cooling operation during the day. Particularly during the summer season during which the demand for hot water supply is low and an air cooling load is high, the amount of cold thermal energy required for the air-cooling operation reaches about several times as large as the amount of cold thermal energy obtained by the water-heating operation.

However, only cold thermal energy obtained by the water-heating operation during the midnight is stored in the thermal storage tank of the hot water supply air conditioning system of Patent Document 1. Thus, only a small part of the air cooling load during the day can be processed using only cold thermal energy stored in the thermal storage tank during the midnight. As a result, in the conventional hot water supply air conditioning system configured to store only cold thermal energy obtained by the water-heating operation, the amount of power required for cooling room air during the day cannot be sufficiently reduced, and therefore the running cost for the hot water supply air conditioning system cannot be sufficiently reduced.

The present disclosure has been made in view of the foregoing, and aims to reduce the running cost for a hot water supply air conditioning system including a hot water supplier, a thermal storage, and a refrigerant circuit.

### SOLUTION TO THE PROBLEM

A first aspect of the invention is intended for a hot water supply air conditioning system. The hot water supply air conditioning system includes a hot water supplier (70) including a hot water storage tank (71) configured to store hot water to be supplied; a thermal storage (90) including a thermal storage tank (91) configured to store a thermal storage medium; and a refrigerant circuit (15) including a hot-water-supply-side heat exchanger (26) connected to the hot water supplier (70), a thermal-storage-side heat exchanger (31) connected to the thermal storage (90), a heat-source-side heat exchanger (21) configured to exchange heat between refrigerant and outdoor air, and a utilization-side heat exchanger (36) configured to condition room air. The hot water supply air conditioning system performs a cold-storage operation in which the refrigerant circuit (15) performs a refrigeration cycle such that the thermal-storage-side heat exchanger (31) serves as an evaporator and the thermal storage (90) and the thermal storage (90) cools the thermal storage medium of the thermal storage tank (91) with refrigerant flowing through the thermal-storage-side heat exchanger (31), and a cold-used air-cooling operation in which the refrigerant circuit (15) circulates refrigerant from the thermal-storage-side heat exchanger (31) to the utilization-side heat exchanger (36) and the thermal storage (90) cools refrigerant flowing through the thermal-storage-side heat exchanger (31) with the thermal storage medium of the thermal storage tank (91). During the cold-storage operation, the hot water supply air conditioning system performs a first operation in which the hot-water-supply-side heat exchanger (26) serves as a radiator and the hot water supplier (70) heats the water of the hot water storage tank (71) with heat dissipated from refrigerant, and a second operation in which the heat-source-side heat exchanger (21) serves as the radiator.

In the first aspect of the invention, the hot water supply air conditioning system (10) performs the cold-storage operation and the cold-used air-cooling operation. In the cold-storage operation, the thermal storage medium of the thermal storage tank (91) is cooled with refrigerant of the refrigerant circuit (15), and cold thermal energy is stored in the thermal storage tank (91). In the cold-storage operation, the hot water supply air conditioning system (10) selectively performs the first and second operations. On the other hand, in the cold-used air-cooling operation, the hot water supply air conditioning system (10) cools room air using cold thermal energy stored in the thermal storage tank (91). In the cold-used air-cooling operation, refrigerant circulating through the refrigerant circuit (15) is cooled in the thermal-storage-side heat exchanger (31), and then flows into the utilization-side heat exchanger (36). Subsequently, the refrigerant is used to cool room air.

The hot water supply air conditioning system (10) of the first aspect of the invention performs the first operation in the cold-storage operation. In the first operation, refrigerant circulating through the refrigerant circuit (15) dissipates heat in the hot-water-supply-side heat exchanger (26), and absorbs heat in the thermal-storage-side heat exchanger (31). The hot water supplier (70) heats water of the hot water storage tank (71) using hot thermal energy obtained in the hot-water-supply-side heat exchanger (26), and the thermal storage (90) cools the thermal storage medium of the thermal storage tank (91) using cold thermal energy obtained in the thermal-storage-side heat exchanger (31). That is, in the first operation, cold thermal energy is obtained by the refrigeration cycle performed by the refrigerant circuit (15) to heat water of the hot water storage tank (71), and the obtained cold thermal energy is stored in the thermal storage tank (91) of the thermal storage (90).

The hot water supply air conditioning system (10) of the first aspect of the invention performs the second operation in the cold-storage operation. In the second operation, refrigerant circulating through the refrigerant circuit (15) dissipates heat in the heat-source-side heat exchanger (21), and absorbs heat in the thermal-storage-side heat exchanger (31). The thermal storage (90) cools the thermal storage medium of the thermal storage tank (91) using cold thermal energy obtained in the thermal-storage-side heat exchanger (31). That is, in the second operation, refrigerant circulating through the refrigerant circuit (15) dissipates heat absorbed from the thermal storage (90) to outdoor air, and cold thermal energy is stored in the thermal storage tank (91) of the thermal storage (90). Thus, in the second operation, even if the hot water supplier (70) does not perform the operation for heating water of the hot water storage tank (71), cold thermal energy is stored in the thermal storage tank (91) of the thermal storage (90).

A second aspect of the invention is intended for the hot water supply air conditioning system of the first aspect of the invention, in which the refrigerant circuit (15) further includes a hot-water-supply-side path (25) in which the hot-water-supply-side heat exchanger (26) is provided, a heat-source-side path (20) in which the heat-source-side heat exchanger (21) is provided, and a bypass path (41) connected to both ends of the hot-water-supply-side path (25) and both ends of the heat-source-side path (20) and being switchable among a first state in which refrigerant flows through the hot-water-supply-side path (25) and bypasses the heat-source-side path (20), a second state in which refrigerant bypasses the hot-water-supply-side path (25) and flows through the heat-source-side path (20), and a third state in which refrigerant bypasses both of the hot-water-supply-side path (25) and the heat-source-side path (20).

In the second aspect of the invention, the hot-water-supply-side path (25), the heat-source-side path (20), and the bypass path (41) are provided in the refrigerant circuit (15). The bypass path (41) switches among the first to third states. When the bypass path (41) is set to the first state, refrigerant flows only through one (25) of the hot-water-supply-side path (25) and the heat-source-side path (20). In the first operation of the cold-storage operation, the bypass path (41) is set to the first state, and refrigerant dissipates heat in the hot-water-supply-side heat exchanger (26). When the bypass path (41) is set to the second state, refrigerant flows only through one (20) of the hot-water-supply-side path (25) and the heat-source-side path (20). In the second operation of the cold-storage operation, the bypass path (41) is set to the second state, and refrigerant dissipates heat in the heat-source-side heat exchanger (21). When the bypass path (41) is set to the third state, refrigerant bypasses both of the hot-water-supply-side path (25) and the heat-source-side path (20). When the bypass path (41) is set to the third state during the cold-used air-cooling operation, refrigerant circulating through the refrigerant circuit (15) absorbs heat in the utilization-side heat exchanger (36). Then, the refrigerant flows into the thermal-storage-side heat exchanger (31) without passing through the heat-source-side heat exchanger (21), and is cooled. Thus, in such a case, only cold thermal energy stored in the thermal storage tank (91) of the thermal storage (90) is used to cool room air in the cold-used air-cooling operation.

A third aspect of the invention is intended for the hot water supply air conditioning system of the second aspect of the invention, in which the hot-water-supply-side path (25) includes a hot-water-supply-side expansion valve (29) disposed on a liquid side of the hot-water-supply-side heat exchanger (26), and the heat-source-side path (20) includes a heat-source-side expansion valve (22) disposed on a liquid side of the heat-source-side heat exchanger (21).

In the third aspect of the invention, the hot-water-supply-side expansion valve (29) is provided in the hot-water-supply-side path (25), and the heat-source-side expansion valve (22) is provided in the heat-source-side path (20). Refrigerant circulating through the refrigerant circuit (15) in the first operation of the cold-storage operation dissipates heat in the hot-water-supply-side heat exchanger (26), and the pressure of the refrigerant is reduced while the refrigerant passes through the hot-water-supply-side expansion valve (29). Then, the refrigerant flows into the thermal-storage-side heat exchanger (31), and absorbs heat. On the other hand, refrigerant circulating through the refrigerant circuit (15) in the second operation of the cold-storage operation dissipates heat in the heat-source-side heat exchanger (21), and the pressure of the refrigerant is reduced while the refrigerant passes through the heat-source-side expansion valve (22). Then, the refrigerant flows into the thermal-storage-side heat exchanger (31), and absorbs heat.

### ADVANTAGES OF THE INVENTION

The hot water supply air conditioning system (10) of the present disclosure can perform the first and second operations in the cold-storage operation. In the first operation, the refrigerant circuit (15) performs the refrigerant cycle, the hot water supplier (70) heats water of the hot water storage tank (71) using heat dissipated from refrigerant in the hot-water-supply-side heat exchanger (26), and cold thermal energy obtained in the thermal-storage-side heat exchanger (31) is stored in the thermal storage tank (91) of the thermal storage (90). On the other hand, in the second operation, the refrigerant circuit (15) performs the refrigeration cycle, refrigerant dissipates heat to outdoor air in the heat-source-side heat exchanger (21), and cold thermal energy obtained in the thermal-storage-side heat exchanger (31) is stored in the thermal storage tank (91) of the thermal storage (90).

When the amount of hot water in the hot water storage tank (71) reaches a required amount in the cold-storage operation, the first operation should be terminated. However, even after termination of the first operation, the hot water supply air conditioning system (10) of the present disclosure can perform the second operation to further store cold thermal energy in the thermal storage tank (91) of the thermal storage (90). Thus, according to the present disclosure, the thermal storage tank (91) of the thermal storage (90) can store not only cold thermal energy obtained when water of the hot water storage tank (71) is heated, but also cold thermal energy obtained when refrigerant of the refrigerant circuit (15) dissipates heat to outdoor air. According to the present disclosure, the cold-storage operation is performed during the midnight during which the cost for electricity is low, and the first and second operations are performed during the cold-storage operation. Thus, the first and second operations are performed in the cold-storage operation to store, in the thermal storage tank (91), a sufficient amount of cold thermal energy required for the cold-used air-cooling operation during the day. As a result, the amount of power consumed in room air cooling during the day can be sufficiently reduced, and the running cost for the hot water supply air conditioning system (10) can be sufficiently reduced.

### BRIEF DESCRIPTION OF THE DRAWINGS

[FIG. 1] FIG. 1 is a piping diagram illustrating a configuration of a hot water supply air conditioning system of a first embodiment.
[FIG. 2] FIG. 2 is a piping diagram illustrating a first cold-storage operation and a water-heating operation in the hot water supply air conditioning system of the first embodiment.
[FIG. 3] FIG. 3 is a piping diagram illustrating a second cold-storage operation in the hot water supply air conditioning system of the first embodiment.
[FIG. 4] FIG. 4 is a piping diagram illustrating a first cold-used air-cooling operation in the hot water supply air conditioning system of the first embodiment.
[FIG. 5] FIG. 5 is a piping diagram illustrating a second cold-used air-cooling operation in the hot water supply air conditioning system of the first embodiment.
[FIG. 6] FIG. 6 is a piping diagram illustrating a simple air-cooling operation in the hot water supply air conditioning system of the first embodiment.
[FIG. 7] FIG. 7 is a piping diagram illustrating a heat-storage air-heating operation in the hot water supply air conditioning system of the first embodiment.
[FIG. 8] FIG. 8 is a piping diagram illustrating a heat-used air-heating operation in the hot water supply air conditioning system of the first embodiment.
[FIG. 9] FIG. 9 is a piping diagram illustrating a simple air-heating operation in the hot water supply air conditioning system of the first embodiment.
[FIG. 10] FIG. 10 is a piping diagram illustrating a configuration of a hot water supply air conditioning system of a second embodiment.
[FIG. 11] FIG. 11 is a piping diagram illustrating a configuration of a hot water supply air conditioning system of a third embodiment.
[FIG. 12] FIG. 12 is a piping diagram illustrating a configuration of a hot water supply air conditioning system of a fourth embodiment.
[FIG. 13] FIG. 13 is a piping diagram illustrating a first cold-storage operation in the hot water supply air conditioning system of the fourth embodiment.
[FIG. 14] FIG. 14 is a piping diagram illustrating a second cold-storage operation and a heat-used defrosting operation in the hot water supply air conditioning system of the fourth embodiment.
[FIG. 15] FIG. 15 is a piping diagram illustrating a third cold-storage operation in the hot water supply air conditioning system of the fourth embodiment.
[FIG. 16] FIG. 16 is a piping diagram illustrating a first cold-used air-cooling operation in the hot water supply air conditioning system of the fourth embodiment.
[FIG. 17] FIG. 17 is a piping diagram illustrating a second cold-used air-cooling operation in the hot water supply air conditioning system of the fourth embodiment.
[FIG. 18] FIG. 18 is a piping diagram illustrating a water-heating cold-used air-cooling operation in the hot water supply air conditioning system of the fourth embodiment.
[FIG. 19] FIG. 19 is a piping diagram illustrating a simple air-cooling operation in the hot water supply air conditioning system of the fourth embodiment.
[FIG. 20] FIG. 20 is a piping diagram illustrating a water-heating air-cooling operation in the hot water supply air conditioning system of the fourth embodiment.
[FIG. 21] FIG. 21 is a piping diagram illustrating a simple water-heating operation in the hot water supply air conditioning system of the fourth embodiment.
[FIG. 22] FIG. 22 is a piping diagram illustrating a water-heating heat-storage operation in the hot water supply air conditioning system of the fourth embodiment.
[FIG. 23] FIG. 23 is a piping diagram illustrating a simple heat-storage operation in the hot water supply air conditioning system of the fourth embodiment.
[FIG. 24] FIG. 24 is a piping diagram illustrating a heat-used air-heating operation in the hot water supply air conditioning system of the fourth embodiment.
[FIG. 25] FIG. 25 is a piping diagram illustrating a simple air-heating operation in the hot water supply air conditioning system of the fourth embodiment.
[FIG. 26] FIG. 26 is a piping diagram illustrating a water-heating air-heating operation in the hot water supply air conditioning system of the fourth embodiment.

### DESCRIPTION OF EMBODIMENTS

Embodiments of the present disclosure will be described below in detail with reference to drawings. Note that the later-described embodiments and variations thereof will be set forth merely for the purpose of preferred examples in nature, and are not intended to limit the scope, applications, and use of the invention.

### «First Embodiment of the Invention»

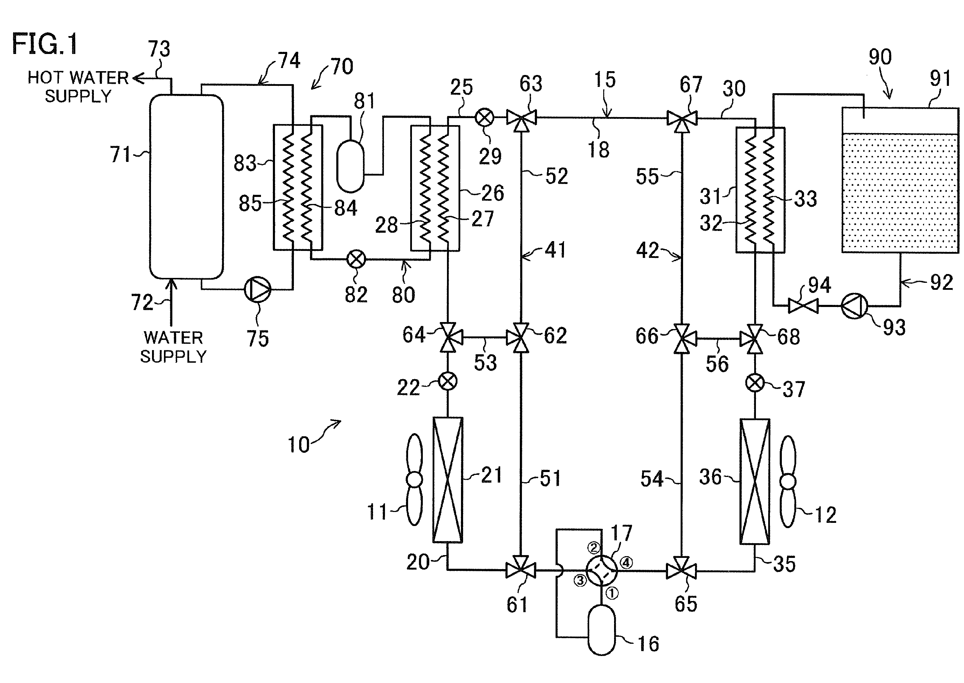

A first embodiment of the present disclosure will be described with reference to FIG. 1. A hot water supply air conditioning system (10) of the present embodiment includes a refrigerant circuit (15), a hot water supplier (70), and a thermal storage (90). Moreover, the hot water supply air conditioning system (10) further includes an outdoor fan (11) and an indoor fan (12).

### <Refrigerant Circuit>

The refrigerant circuit (15) is a closed circuit filled with refrigerant. The refrigerant circuit (15) includes a compressor (16), a four-way valve (17), a heat-source-side pipe (20) forming a heat-source-side path, a hot-water-supply-side pipe (25) forming a hot-water-supply-side path, a thermal-storage-side pipe (30) forming a thermal-storage-side path, a utilization-side pipe (35) forming a utilization-side path, and a connection pipe (18). Moreover, the refrigerant circuit (15) further includes six bypass pipes (51-56) and eight three-way valves (61-68).

In the heat-source-side pipe (20), a heat-source-side heat exchanger (21) and a heat-source-side expansion valve (22) are arranged in this order from one end to the other end of the heat-source-side pipe (20). That is, in the heat-source-side pipe (20), the heat-source-side expansion valve (22) is disposed on a liquid side of the heat-source-side heat exchanger (21). In the hot-water-supply-side pipe (25), a hot-water-supply-side heat exchanger (26) and a hot-water-supply-side expansion valve (29) are arranged in this order from one end to the other end of the hot-water-supply-side pipe (25). That is, in the hot-water-supply-side pipe (25), the hot-water-supply-side expansion valve (29) is disposed on a liquid side of the hot-water-supply-side heat exchanger (26). A thermal-storage-side heat exchanger (31) is disposed in the thermal-storage-side pipe (30). In the utilization-side pipe (35), a utilization-side heat exchanger (36) and a utilization-side expansion valve (37) are arranged from one end to the other end of the utilization-side pipe (35). That is, in the utilization-side pipe (35), the utilization-side expansion valve (37) is disposed on a liquid side of the utilization-side heat exchanger (36).

The compressor (16) is, on a discharge side thereof, connected to a first port of the four-way valve (17), and is, on a suction side thereof, connected to a second port of the four-way valve (17). The heat-source-side pipe (20), the hot-water-supply-side pipe (25), the connection pipe (18), the thermal-storage-side pipe (30), and the utilization-side pipe (35) are arranged in this order from a third port to a fourth port of the four-way valve (17) in the refrigerant circuit (15). Moreover, in the refrigerant circuit (15), the first three-way valve (61) is disposed between one end of the heat-source-side pipe (20) and the four-way valve (17), the fourth three-way valve (64) is disposed between the other end of the heat-source-side pipe (20) and one end of the hot-water-supply-side pipe (25), the third three-way valve (63) is disposed between the other end of the hot-water-supply-side pipe (25) and one end of the connection pipe (18), the seventh three-way valve (67) is disposed between the other end of the connection pipe (18) and one end of the thermal-storage-side pipe (30), the eighth three-way valve (68) is disposed between the other end of the thermal-storage-side pipe (30) and one end of the utilization-side pipe (35), and the fifth three-way valve (65) is disposed between the other end of the utilization-side pipe (35) and the four-way valve (17).

One end of the first bypass pipe (51) is connected to the first three-way valve (61), and the other end of the first bypass pipe (51) is connected to the second three-way valve (62). One end of the second bypass pipe (52) is connected to the second three-way valve (62), and the other end of the second bypass pipe (52) is connected to the third three-way valve (63). One end of the third bypass pipe (53) is connected to the second three-way valve (62), and the other end of the third bypass pipe (53) is connected to the fourth three-way valve (64). These bypass pipes (51, 52, 53) and the three-way valves (61, 62, 63, 64) form a first bypass path (41).

The first bypass path (41) switches among first, second, and third states. When the first bypass path (41) is in the first state, refrigerant circulating through the refrigerant circuit (15) flows through the hot-water-supply-side pipe (25), and bypasses the heat-source-side pipe (20). When the first bypass path (41) is in the second state, refrigerant circulating through the refrigerant circuit (15) bypasses the hot-water-supply-side pipe (25), and flows through the heat-source-side pipe (20). When the first bypass path (41) is in the third state, refrigerant circulating through the refrigerant circuit (15) bypasses both of the hot-water-supply-side pipe (25) and the heat-source-side pipe (20). The first bypass path (41) switches among these three states in such a manner that the three-way valves (61, 62, 63, 64) are operated. The states of the three-way valves (61, 62, 63, 64) in each state of the first bypass path (41) will be described later.

One end of the fourth bypass pipe (54) is connected to the fifth three-way valve (65), and the other end of the fourth bypass pipe (54) is connected to the sixth three-way valve (66). One end of the fifth bypass pipe (55) is connected to the sixth three-way valve (66), and the other end of the fifth bypass pipe (55) is connected to the seventh three-way valve (67). One end of the sixth bypass pipe (56) is connected to the sixth three-way valve (66), and the other end of the sixth bypass pipe (56) is connected to the eighth three-way valve (68). These bypass pipes (54, 55, 56) and the three-way valves (65, 66, 67, 68) form a second bypass path (42).

The second bypass path (42) switches among first, second, and third states. When the second bypass path (42) is in the first state, refrigerant circulating through the refrigerant circuit (15) flows through the thermal-storage-side pipe (30), and bypasses the utilization-side pipe (35). When the second bypass path (42) is in the second state, refrigerant circulating through the refrigerant circuit (15) bypasses the thermal-storage-side pipe (30), and flows through the utilization-side pipe (35). When the second bypass path (42) is in the third state, refrigerant circulating through the refrigerant circuit (15) does not flow into the bypass pipes (54, 55, 56) forming the second bypass path (42), but flows though both of the thermal-storage-side pipe (30) and the utilization-side pipe (35). The second bypass path (42) switches among these three states in such a manner that the three-way valves (65, 66, 67, 68) are operated. The states of the three-way valves (65, 66, 67, 68) in each state of the second bypass path (42) will be described later.

The compressor (16) is a hermetic compressor including a single casing in which a compression mechanism and an electric motor are housed. The compression mechanism of the compressor (16) is a rolling piston type rotary fluid machine or a swing piston type rotary fluid machine. Note that the compression mechanism of the compressor (16) may be a scroll fluid machine.

The four-way valve (17) switches between a first state (i.e., the state indicated by a solid line in FIG. 1) in which the first and third ports communicate with each other and the second and fourth ports communicate with each other, and a second state (i.e., the state indicated by a dashed line in FIG. 1) in which the first and fourth ports communicate with each other and the second and third ports communicate with each other.

The heat-source-side heat exchanger (21) is a so-called "cross-fin type heat exchanger." The heat-source-side heat exchanger (21) is configured to exchange heat between refrigerant and outdoor air supplied by the outdoor fan (11).

The hot-water-supply-side heat exchanger (26) is a plate type heat exchanger in which a plurality of primary flow paths (27) and a plurality of secondary flow paths (28) are formed, and is configured to exchange heat between fluid flowing through the primary flow path (27) and fluid flowing through the secondary flow path (28). The hot-water-supply-side pipe (25) of the refrigerant circuit (15) is connected to each primary flow path (27) of the hot-water-supply-side heat exchanger (26). A later-described hot water supply refrigerant circuit (80) of the hot water supplier (70) is connected to each secondary flow path (28) of the hot-water-supply-side heat exchanger (26).

The thermal-storage-side heat exchanger (31) is a plate type heat exchanger in which a plurality of primary flow paths (32) and a plurality of secondary flow paths (33) are formed, and is configured to exchange heat between fluid flowing through the primary flow path (32) and fluid flowing through the secondary flow path (33). The thermal-storage-side pipe (30) of the refrigerant circuit (15) is connected to each primary flow path (27) of the thermal-storage-side heat exchanger (31). A later-described thermal storage medium circuit (92) of the thermal storage (90) is connected to each secondary flow path (28) of the thermal-storage-side heat exchanger (31).

The utilization-side heat exchanger (36) is a so-called "cross-fin type heat exchanger." The utilization-side heat exchanger (36) is configured to exchange heat between refrigerant and room air supplied by the indoor fan (12).

Each of the heat-source-side expansion valve (22), the hot-water-supply-side expansion valve (29), and the utilization-side expansion valve (37) is an electric expansion valve whose opening degree is variable.

### <Hot Water Supplier>

The hot water supplier (70) includes a hot water storage tank (71), a water circuit (74), and the hot water supply refrigerant circuit (80).

The hot water storage tank (71) is a cylindrical tank, and is in a standing attitude. A water supply pipe (72) is connected to a bottom part of the hot water storage tank (71), and a hot water supply pipe (73) is connected to a top part of the hot water storage tank (71). The hot water storage tank (71) stores hot water to be supplied. Hot water of the hot water storage tank (71) is supplied to, e.g., a hot-water tap or a bathtub through the hot water supply pipe (73). The hot water storage tank (71) is, through the water supply pipe (72), re-filled with the same amount of water as the amount of hot water discharged through the hot water supply pipe (73).

The water circuit (74) is, at an inlet end thereof, connected to the bottom part of the hot water storage tank (71), and is, at an outlet end thereof, connected to the top part of the hot water storage tank (71). A pump (75) is provided in the water circuit (74). Moreover, a later-described heating heat exchanger (83) is disposed in part of the water circuit (74) on a discharge side of the pump (75).

The hot water supply refrigerant circuit (80) is a closed circuit filled with refrigerant. The hot water supply refrigerant circuit (80) includes a hot water supply compressor (81), the heating heat exchanger (83), and a hot water supply expansion valve (82). The hot water supply refrigerant circuit (80) is connected to each secondary flow path (28) of the hot-water-supply-side heat exchanger (26). The heating heat exchanger (83), the hot water supply expansion valve (82), and the hot-water-supply-side heat exchanger (26) are arranged in this order from a discharge side to a suction side of the hot water supply compressor (81) in the hot water supply refrigerant circuit (80).

The hot water supply compressor (81) is a hermetic compressor including a single casing in which a compression mechanism and an electric motor are housed. The compression mechanism of the hot water supply compressor (81) is a rolling piston type rotary fluid machine or a swing piston type rotary fluid machine.

The heating heat exchanger (83) is a plate type heat exchanger in which a plurality of primary flow paths (84) and a plurality of secondary flow paths (85) are formed, and is configured to exchange heat between fluid flowing through the primary flow path (84) and fluid flowing through the secondary flow path (85). The hot water supply refrigerant circuit (80) is connected to each primary flow path (84) of the heating heat exchanger (83). The water circuit (74) is connected to each secondary flow path (85) of the heating heat exchanger (83).

### <Thermal Storage>

The thermal storage (90) includes a thermal storage tank (91) and the thermal storage medium circuit (92).

The thermal storage tank (91) is a rectangular parallelepiped tank. The thermal storage tank (91) stores a thermal storage medium (i.e., a so-called "latent heat storage medium") containing cold thermal energy or hot thermal energy as latent heat. Examples of the latent heat storage medium include a water solution of tetra-n-butylammonium bromide (TBAB), a water solution of trimethylol ethane (TME), and paraffin-based slurry.

The thermal storage medium circuit (92) is, at an inlet end thereof, connected to a bottom part of the thermal storage tank (91), and is, at an outlet end thereof, connected to a top part of the thermal storage tank (91). A pump (93) and a control valve (94) are provided in the thermal storage medium circuit (92). In the thermal storage medium circuit (92), the control valve (94) and the secondary flow paths (33) of the thermal-storage-side heat exchanger (31) are arranged on a discharge side of the pump (93).

### Operations

Operations of the hot water supply air conditioning system (10) will be described. The hot water supply air conditioning system (10) performs a first cold-storage operation, a second cold-storage operation, a first cold-used air-cooling operation, a second cold-used air-cooling operation, a simple air-cooling operation, a heat-storage air-heating operation, a water-heating operation, a heat-used air-heating operation, and a simple air-heating operation.

### <First Cold-Storage Operation>

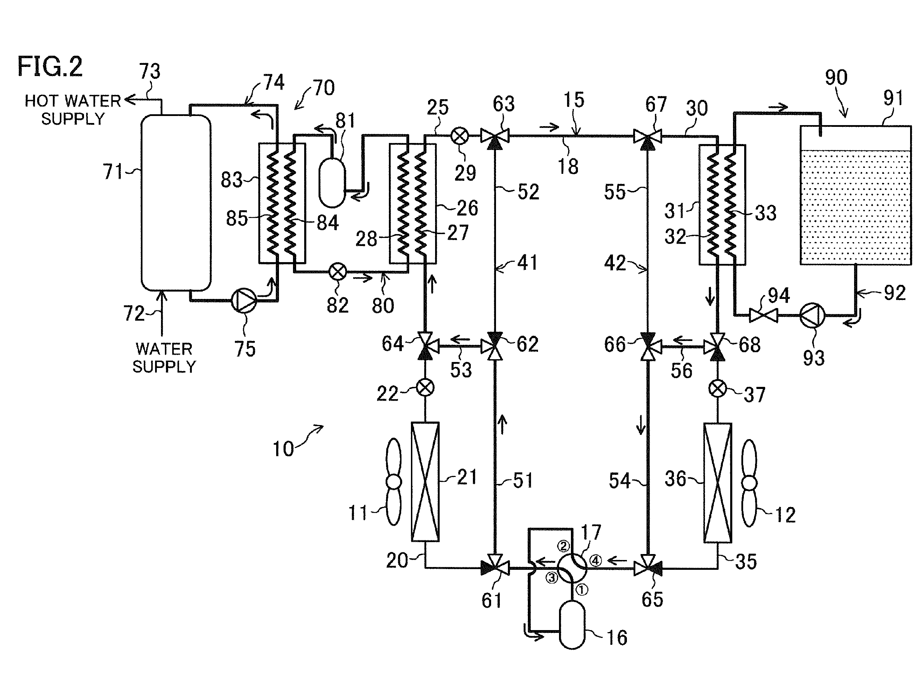

The first cold-storage operation will be described with reference to FIG. 2. In the first cold-storage operation, the hot water supply air conditioning system (10) performs a first operation. That is, in the hot water supply air conditioning system (10), the hot water supplier (70) performs the operation for heating water of the hot water storage tank (71), and the thermal storage (90) stores, in the thermal storage tank (91), cold thermal energy obtained by such operation of the hot water supplier (70). Moreover, in the first cold-storage operation, the outdoor fan (11) and the indoor fan (12) are stopped.

The refrigerant circuit (15) performs a refrigeration cycle such that the hot-water-supply-side heat exchanger (26) serves as a condenser (i.e., a radiator) and that the thermal-storage-side heat exchanger (31) serves as an evaporator. Specifically, in the refrigerant circuit (15), the compressor (16) is operated, and the four-way valve (17) is set to the first state. Moreover, the opening degree of the hot-water-supply-side expansion valve (29) is adjusted such that the superheat degree of refrigerant at an outlet of each primary flow path (32) of the thermal-storage-side heat exchanger (31) reaches a predetermined target value.

In the refrigerant circuit (15), the first bypass path (41) is set to the first state. In the first bypass path (41) set to the first state, each three-way valve (61, 62, 63, 64) is in the following state. The first three-way valve (61) causes the third port of the four-way valve (17) to communicate with the first bypass pipe (51), and blocks the third port of the four-way valve (17) from communicating with the heat-source-side pipe (20). The second three-way valve (62) causes the first bypass pipe (51) to communicate with the third bypass pipe (53), and blocks the first bypass pipe (51) from communicating with the second bypass pipe (52). The third three-way valve (63) causes the hot-water-supply-side pipe (25) to communicate with the connection pipe (18), and blocks the hot-water-supply-side pipe (25) from communicating with the second bypass pipe (52). The fourth three-way valve (64) causes the third bypass pipe (53) to communicate with the hot-water-supply-side pipe (25), and blocks the third bypass pipe (53) from communicating with the heat-source-side pipe (20).

In the refrigerant circuit (15), the second bypass path (42) is set to the first state. In the second bypass path (42) set to the first state, each three-way valve (65, 66, 67, 68) is in the following state. The fifth three-way valve (65) causes the fourth bypass pipe (54) to communicate with the fourth port of the four-way valve (17), and blocks the fourth bypass pipe (54) from communicating with the utilization-side pipe (35). The sixth three-way valve (66) causes the sixth bypass pipe (56) to communicate with the fourth bypass pipe (54), and blocks the sixth bypass pipe (56) from communicating with the fifth bypass pipe (55). The seventh three-way valve (67) causes the connection pipe (18) to communicate with the thermal-storage-side pipe (30), and blocks the connection pipe (18) from communicating with the fifth bypass pipe (55). The eighth three-way valve (68) causes the thermal-storage-side pipe (30) to communicate with the sixth bypass pipe (56), and blocks the thermal-storage-side pipe (30) from communicating with the utilization-side pipe (35).

A flow of refrigerant in the refrigerant circuit (15) will be described. Refrigerant discharged from the compressor (16) passes through the four-way valve (17), the first bypass pipe (51), and the third bypass pipe (53) in this order, and then flows into the hot-water-supply-side pipe (25). The refrigerant flowing into the hot-water-supply-side pipe (25) is condensed by dissipating heat while passing through each primary flow path (27) of the hot-water-supply-side heat exchanger (26). Then, the pressure of the refrigerant is reduced while the refrigerant passes through the hot-water-supply-side expansion valve (29). Subsequently, the refrigerant flows into the thermal-storage-side pipe (30) through the connection pipe (18). The refrigerant flowing into the thermal-storage-side pipe (30) is evaporated by absorbing heat while passing through each primary flow path (32) of the thermal-storage-side heat exchanger (31). Then, the refrigerant passes through the sixth bypass pipe (56), the fourth bypass pipe (54), and the four-way valve (17) in this order, and then is sucked into the compressor (16). The compressor (16) compresses the sucked refrigerant, and discharges the compressed refrigerant.

In the first cold-storage operation, the hot water supply compressor (81) of the hot water supplier (70) is operated, and the hot water supply refrigerant circuit (80) performs a refrigeration cycle. In such a state, the opening degree of the hot water supply expansion valve (82) is adjusted such that the superheat degree of refrigerant at an outlet of each secondary flow path (28) of the hot-water-supply-side heat exchanger (26) reaches a predetermined target value. Moreover, in the first cold-storage operation, the pump (75) of the water circuit (74) is operated, and water circulates between the hot water storage tank (71) and the heating heat exchanger (83).

A flow of refrigerant in the hot water supply refrigerant circuit (80) will be described. Refrigerant discharged from the hot water supply compressor (81) is condensed by dissipating heat while passing through each primary flow path (84) of the heating heat exchanger (83). The pressure of the refrigerant flowing out from the heating heat exchanger (83) is reduced while the refrigerant passes through the hot water supply expansion valve (82). Subsequently, the refrigerant flows into each secondary flow path (28) of the hot-water-supply-side heat exchanger (26). The refrigerant flowing through each secondary flow path (28) of the hot-water-supply-side heat exchanger (26) is evaporated by absorbing heat from refrigerant flowing through a corresponding one of the secondary flow paths (28). Then, the refrigerant is sucked into the hot water supply compressor (81). The hot water supply compressor (81) compresses the sucked refrigerant, and discharges the compressed refrigerant.

A flow of water in the water circuit (74) will be described. Low-temperature water in the bottom part of the thermal storage tank (91) is sent to each secondary flow path (85) of the heating heat exchanger (83) by the pump (75), and then is heated with refrigerant flowing through a corresponding one of the primary flow paths (84) of the heating heat exchanger (83). Then, the water heated to a high temperature is sent back to the top part of the hot water storage tank (71).

In the first cold-storage operation, the pump (93) of the thermal storage medium circuit (92) is operated, and the thermal storage medium circulates between the thermal storage tank (91) and the thermal-storage-side heat exchanger (31). The thermal storage medium of the thermal storage tank (91) is sent to each secondary flow path (33) of the thermal-storage-side heat exchanger (31) by the pump (93), and then is cooled with refrigerant flowing through a corresponding one of the primary flow paths (32) of the thermal-storage-side heat exchanger (31). The thermal storage medium cooled in the thermal-storage-side heat exchanger (31) is sent back to the thermal storage tank (91). As a result, cold thermal energy provided to the thermal storage medium in the thermal-storage-side heat exchanger (31) is stored in the thermal storage tank (91).

### <Second Cold-Storage Operation>

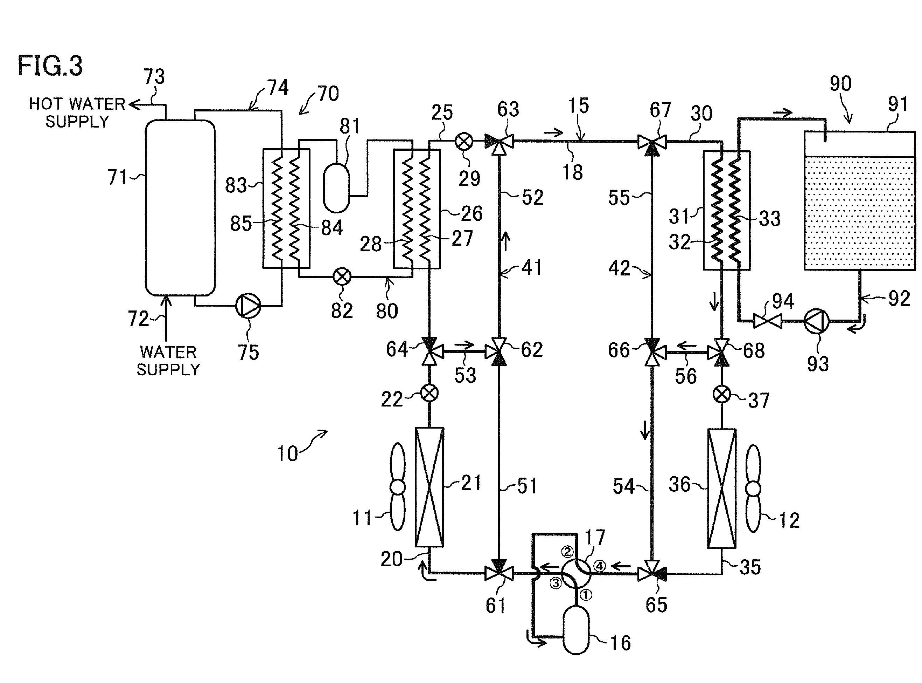

The second cold-storage operation will be described with reference to FIG. 3. In the second cold-storage operation, the hot water supply air conditioning system (10) performs a second operation. That is, in the hot water supply air conditioning system (10), the hot water supplier (70) is stopped, and the thermal storage (90) stores cold thermal energy in the thermal storage tank (91). Moreover, in the second cold-storage operation, the outdoor fan (11) is operated, and the indoor fan (12) is stopped.

The refrigerant circuit (15) performs a refrigeration cycle such that the heat-source-side heat exchanger (21) serves as a condenser (i.e., a radiator) and that the thermal-storage-side heat exchanger (31) serves as an evaporator. Specifically, in the refrigerant circuit (15), the compressor (16) is operated, and the four-way valve (17) is set to the first state. Moreover, the opening degree of the heat-source-side expansion valve (22) is adjusted such that the superheat degree of refrigerant at the outlet of each primary flow path (32) of the thermal-storage-side heat exchanger (31) reaches a predetermined target value.

In the refrigerant circuit (15), the first bypass path (41) is set to the second state. In the first bypass path (41) set to the second state, each three-way valve (61, 62, 63, 64) is in the following state. The first three-way valve (61) causes the third port of the four-way valve (17) to communicate with the heat-source-side pipe (20), and blocks the third port of the four-way valve (17) from communicating with the first bypass pipe (51). The second three-way valve (62) causes the third bypass pipe (53) to communicate with the second bypass pipe (52), and blocks the third bypass pipe (53) from communicating with the first bypass pipe (51). The third three-way valve (63) causes the second bypass pipe (52) to communicate with the connection pipe (18), and blocks the second bypass pipe (52) from communicating with the hot-water-supply-side pipe (25). The fourth three-way valve (64) causes the heat-source-side pipe (20) to communicate with the third bypass pipe (53), and blocks the heat-source-side pipe (20) from communicating with the hot-water-supply-side pipe (25).

In the refrigerant circuit (15), the second bypass path (42) is set to the first state. In the second bypass path (42) set to the first state, each three-way valve (65, 66, 67, 68) is in the state as in the first cold-storage operation.

A flow of refrigerant in the refrigerant circuit (15) will be described. Refrigerant discharged from the compressor (16) flows into the heat-source-side pipe (20) through the four-way valve (17). The refrigerant flowing into the heat-source-side pipe (20) is condensed by dissipating heat to outdoor air while passing through the heat-source-side heat exchanger (21). Then, the pressure of the refrigerant is reduced while the refrigerant passes through the heat-source-side expansion valve (22). Subsequently, the refrigerant passes through the third bypass pipe (53), the second bypass pipe (52), and the connection pipe (18) in this order, and then flows into the thermal-storage-side pipe (30). The refrigerant flowing into the thermal-storage-side pipe (30) is evaporated by absorbing heat while passing through each primary flow path (32) of the thermal-storage-side heat exchanger (31). Subsequently, the refrigerant passes through the sixth bypass pipe (56), the fourth bypass pipe (54), and the four-way valve (17) in this order, and then is sucked into the compressor (16). The compressor (16) compresses the sucked refrigerant, and discharges the compressed refrigerant.

In the second cold-storage operation, the pump (93) of the thermal storage medium circuit (92) is operated, and the thermal storage medium circulates between the thermal storage tank (91) and the thermal-storage-side heat exchanger (31). Cold thermal energy obtained by the refrigeration cycle performed by the refrigerant circuit (15) is stored in the thermal storage tank (91) of the thermal storage (90).

### <First Cold-Used Air-Cooling Operation>

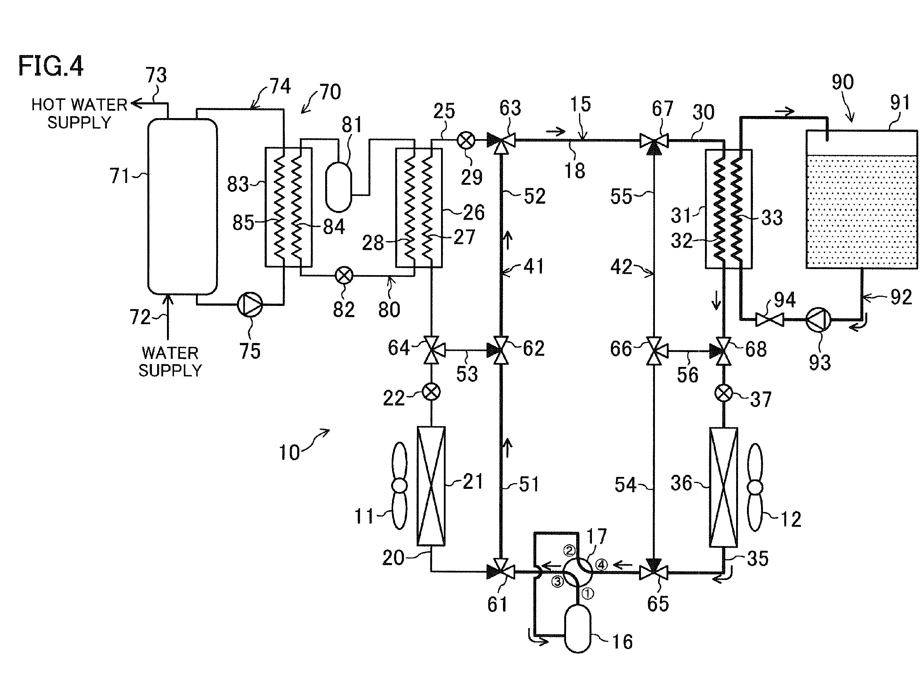

The first cold-used air-cooling operation will be described with reference to FIG. 4. In the first cold-used air-cooling operation, only cold thermal energy stored in the thermal storage tank (91) is used to cool room air. In the first cold-used air-cooling operation, the pump (93) of the thermal storage medium circuit (92) is operated, and the thermal storage medium circulates between the thermal storage tank (91) and the thermal-storage-side heat exchanger (31). Moreover, in the first cold-used air-cooling operation, the hot water supplier (70) is stopped. Further, in the first cold-used air-cooling operation, the outdoor fan (11) is stopped, and the indoor fan (12) is operated.

In the refrigerant circuit (15), the compressor (16) is operated, and the four-way valve (17) is set to the first state. Moreover, the utilization-side expansion valve (37) is held in a fully-open state. During the first cold-used air-cooling operation, the compressor (16) is operated as a gas pump in the refrigerant circuit (15), and refrigerant circulates between the thermal-storage-side heat exchanger (31) and the utilization-side heat exchanger (36) in the refrigerant circuit (15).

In the refrigerant circuit (15), the first bypass path (41) is set to the third state. In the first bypass path (41) set to the third state, each three-way valve (61, 62, 63, 64) is in the following state. The first three-way valve (61) causes the third port of the four-way valve (17) to communicate with the first bypass pipe (51), and blocks the third port of the four-way valve (17) from communicating with the heat-source-side pipe (20). The second three-way valve (62) causes the first bypass pipe (51) to communicate with the second bypass pipe (52), and blocks the first bypass pipe (51) from communicating with the third bypass pipe (53). The third three-way valve (63) causes the second bypass pipe (52) to communicate with the connection pipe (18), and blocks the second bypass pipe (52) from communicating with the hot-water-supply-side pipe (25). The fourth three-way valve (64) may be in any state.

In the refrigerant circuit (15), the second bypass path (42) is set to the third state. In the second bypass path (42) set to the third state, each three-way valve (65, 66, 67, 68) is in the following state. The fifth three-way valve (65) causes the utilization-side pipe (35) to communicate with the fourth port of the four-way valve (17), and blocks the utilization-side pipe (35) from communicating with the fourth bypass pipe (54). The sixth three-way valve (66) may be in any state. The seventh three-way valve (67) causes the connection pipe (18) to communicate with the thermal-storage-side pipe (30), and blocks the connection pipe (18) from communicating with the fifth bypass pipe (55). The eighth three-way valve (68) causes the thermal-storage-side pipe (30) to communicate with the utilization-side pipe (35), and blocks the thermal-storage-side pipe (30) from communicating with the sixth bypass pipe (56).

A flow of refrigerant in the refrigerant circuit (15) will be described. Refrigerant discharged from the compressor (16) passes through the four-way valve (17), the first bypass pipe (51), the second bypass pipe (52), and the connection pipe (18) in this order, and then flows into the thermal-storage-side pipe (30). Then, the refrigerant flows into each primary flow path (32) of the thermal-storage-side heat exchanger (31), and then is condensed by dissipating heat to the thermal storage medium flowing through a corresponding one of the secondary flow paths (33) of the thermal-storage-side heat exchanger (31). The refrigerant flowing out from the thermal-storage-side heat exchanger (31) flows into the utilization-side pipe (35), and then flows into the utilization-side heat exchanger (36) through the utilization-side expansion valve (37). In the utilization-side heat exchanger (36), the refrigerant is evaporated by absorbing heat from room air. The room air cooled in the utilization-side heat exchanger (36) is supplied to the inside of a room. The refrigerant having passed through the utilization-side heat exchanger (36) is sucked into the compressor (16) through the four-way valve (17). The compressor (16) operated as the gas pump increases the pressure of the sucked refrigerant, and then discharges such refrigerant.

As just described, in the first cold-used air-cooling operation, the pump (93) of the thermal storage medium circuit (92) is operated, and the thermal storage medium circulates between the thermal storage tank (91) and the thermal-storage-side heat exchanger (31). The thermal storage medium of the thermal storage tank (91) is sent to each secondary flow path (33) of the thermal-storage-side heat exchanger (31) by the pump (93), and absorbs heat from refrigerant flowing through a corresponding one of the primary flow paths (32) of the thermal-storage-side heat exchanger (31). That is, in the thermal-storage-side heat exchanger (31), cold thermal energy is provided from the thermal storage medium of the secondary flow path (33) to refrigerant of the primary flow path (32). The thermal storage medium having passed through the secondary flow paths (33) of the thermal-storage-side heat exchanger (31) is sent back to the thermal storage tank (91).

### <Second Cold-Used Air-Cooling Operation>

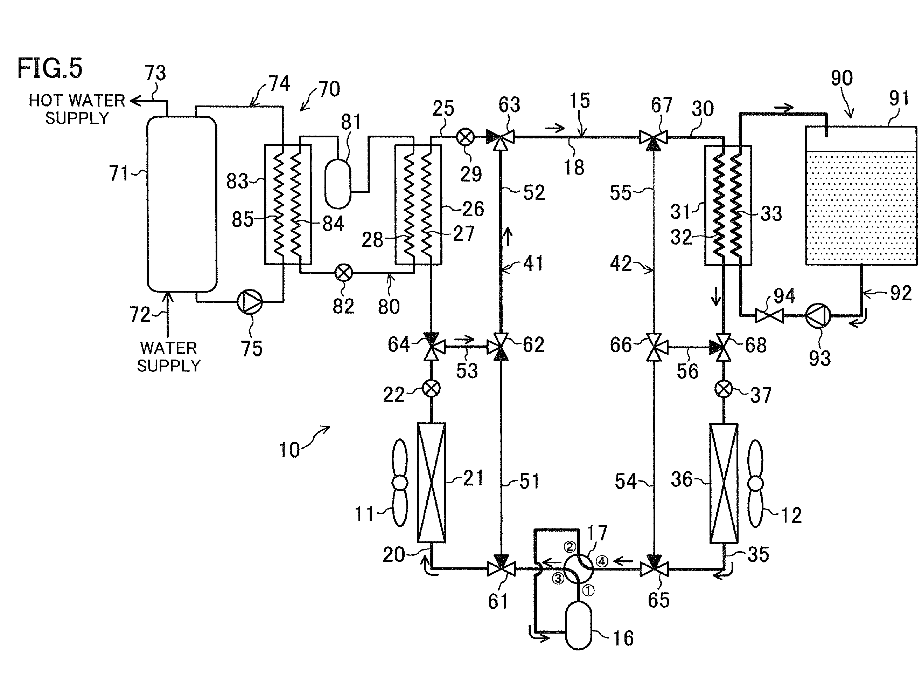

The second cold-used air-cooling operation will be described with reference to FIG. 5. In the second cold-used air-cooling operation, cold thermal energy stored in the thermal storage tank (91) and cold thermal energy obtained by a refrigeration cycle performed by the refrigerant circuit (15) are used to cool room air. In the second cold-used air-cooling operation, the pump (93) of the thermal storage medium circuit (92) is operated, and the thermal storage medium circulates between the thermal storage tank (91) and the thermal-storage-side heat exchanger (31). Moreover, in the second cold-used air-cooling operation, the hot water supplier (70) is stopped. Further, in the second cold-used air-cooling operation, the outdoor fan (11) and the indoor fan (12) are operated.

The refrigerant circuit (15) performs the refrigeration cycle such that the heat-source-side heat exchanger (21) serves as a condenser (i.e., a radiator), that the thermal-storage-side heat exchanger (31) serves as a sub-cooler (i.e., a radiator), and that the utilization-side heat exchanger (36) serves as an evaporator. Specifically, in the refrigerant circuit (15), the compressor (16) is operated, and the four-way valve (17) is set to the first state. The heat-source-side expansion valve (22) is held in a fully-open state. Moreover, the opening degree of the utilization-side expansion valve (37) is adjusted such that the superheat degree of refrigerant at an outlet of the utilization-side heat exchanger (36) reaches a predetermined target value.

In the refrigerant circuit (15), the first bypass path (41) is set to the second state. In the first bypass path (41) set to the second state, each three-way valve (61, 62, 63, 64) is in the state as in the second cold-storage operation.

In the refrigerant circuit (15), the second bypass path (42) is set to the third state. In the second bypass path (42) set to the third state, each three-way valve (65, 66, 67, 68) is in the state as in the first cold-used air-cooling operation.

A flow of refrigerant in the refrigerant circuit (15) will be described. Refrigerant discharged from the compressor (16) flows into the heat-source-side pipe (20) through the four-way valve (17). The refrigerant flowing into the heat-source-side pipe (20) is condensed by dissipating heat to outdoor air while passing through the heat-source-side heat exchanger (21). Then, the refrigerant passes through the heat-source-side expansion valve (22), the third bypass pipe (53), the second bypass pipe (52), and the connection pipe (18) in this order, and then flows into the thermal-storage-side pipe (30). Subsequently, the refrigerant flows into each primary flow path (32) of the thermal-storage-side heat exchanger (31). In the thermal-storage-side heat exchanger (31), the refrigerant flowing through each primary flow path (32) is cooled with the thermal storage medium flowing through a corresponding one of the secondary flow paths (33). The pressure of the refrigerant having passed through the thermal-storage-side heat exchanger (31) is reduced while the refrigerant passes through the utilization-side expansion valve (37). Then, the refrigerant flows into the utilization-side heat exchanger (36), and then is evaporated by absorbing heat from room air. The room air cooled in the utilization-side heat exchanger (36) is supplied to the inside of the room. The refrigerant having passed through the utilization-side heat exchanger (36) is sucked into the compressor (16) through the four-way valve (17). The compressor (16) compresses the sucked refrigerant, and discharges the compressed refrigerant.

### <Simple Air-Cooling Operation>

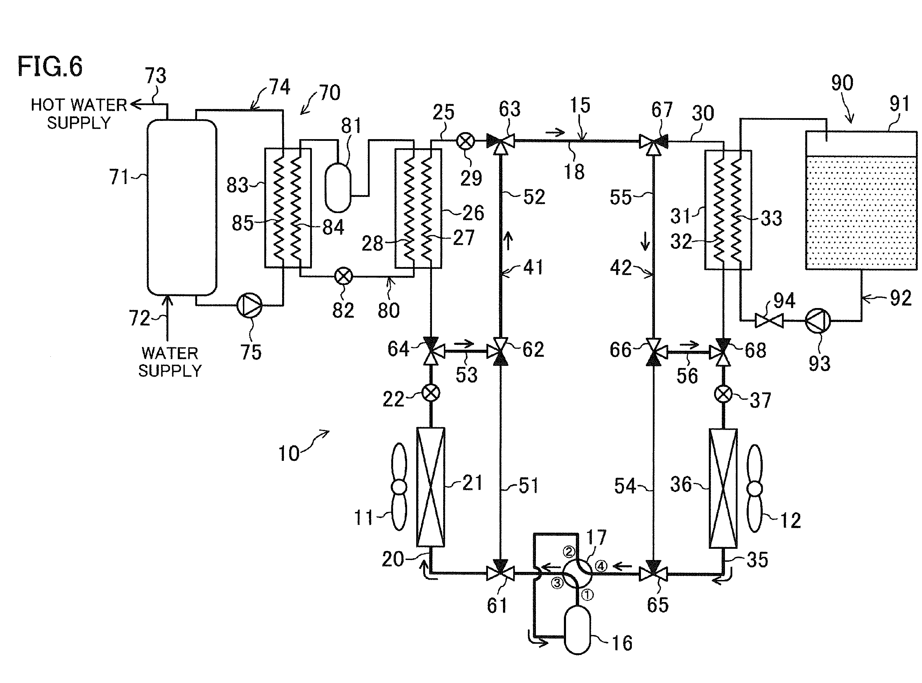

The simple air-cooling operation will be described with reference to FIG. 6. In the simple air-cooling operation, only cold thermal energy obtained by a refrigeration cycle performed by the refrigerant circuit (15) is used to cool room air. In the simple air-cooling operation, the hot water supplier (70) and the thermal storage (90) are stopped. Moreover, in the simple air-cooling operation, the outdoor fan (11) and the indoor fan (12) are operated.

The refrigerant circuit (15) performs the refrigeration cycle such that the heat-source-side heat exchanger (21) serves as a condenser (i.e., a radiator) and that the utilization-side heat exchanger (36) serves as an evaporator. Specifically, in the refrigerant circuit (15), the compressor (16) is operated, and the four-way valve (17) is set to the first state. The heat-source-side expansion valve (22) is held in the fully-open state. Moreover, the opening degree of the utilization-side expansion valve (37) is adjusted such that the superheat degree of refrigerant at the outlet of the utilization-side heat exchanger (36) reaches a predetermined target value.

In the refrigerant circuit (15), the first bypass path (41) is set to the second state. In the first bypass path (41) set to the second state, each three-way valve (61, 62, 63, 64) is in the state as in the second cold-storage operation.

In the refrigerant circuit (15), the second bypass path (42) is set to the second state. In the second bypass path (42) set to the second state, each three-way valve (65, 66, 67, 68) is in the following state. The fifth three-way valve (65) causes the utilization-side pipe (35) to communicate with the fourth port of the four-way valve (17), and blocks the utilization-side pipe (35) from communicating with the fourth bypass pipe (54). The sixth three-way valve (66) causes the fifth bypass pipe (55) to communicate with the sixth bypass pipe (56), and blocks the fifth bypass pipe (55) from communicating with the fourth bypass pipe (54). The seventh three-way valve (67) causes the connection pipe (18) to communicate with the fifth bypass pipe (55), and blocks the connection pipe (18) from communicating with the thermal-storage-side pipe (30). The eighth three-way valve (68) causes the sixth bypass pipe (56) to communicate with the utilization-side pipe (35), and blocks the sixth bypass pipe (56) from communicating with the thermal-storage-side pipe (30).

A flow of refrigerant in the refrigerant circuit (15) will be described. Refrigerant discharged from the compressor (16) flows into the heat-source-side pipe (20) through the four-way valve (17). The refrigerant flowing into the heat-source-side pipe (20) is condensed by dissipating heat to outdoor air while passing through the heat-source-side heat exchanger (21). Then, the refrigerant passes through the heat-source-side expansion valve (22), the third bypass pipe (53), the second bypass pipe (52), the connection pipe (18), the fifth bypass pipe (55), and the sixth bypass pipe (56) in this order, and then flows into the utilization-side pipe (35). The pressure of the refrigerant flowing into the utilization-side pipe (35) is reduced while the refrigerant passes through the utilization-side expansion valve (37). Subsequently, the refrigerant flows into the utilization-side heat exchanger (36), and is evaporated by absorbing heat from room air. The room air cooled in the utilization-side heat exchanger (36) is supplied to the inside of the room. The refrigerant having passed through the utilization-side heat exchanger (36) is sucked into the compressor (16) through the four-way valve (17). The compressor (16) compresses the sucked refrigerant, and discharges the compressed refrigerant.

### <Heat-Storage Air-Heating Operation>

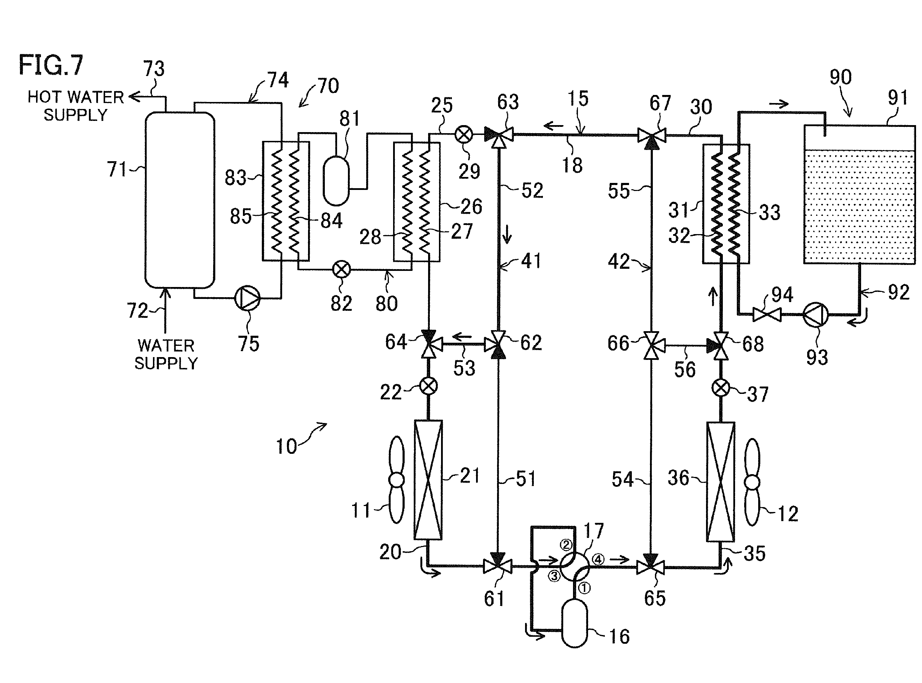

The heat-storage air-heating operation will be described with reference to FIG. 7. In the heat-storage air-heating operation, hot thermal energy is obtained by a refrigeration cycle performed by the refrigerant circuit (15). Part of the obtained hot thermal energy is used to heat room air, and the remaining part of the obtained hot thermal energy is stored in the thermal storage tank (91). In the heat-storage air-heating operation, the pump (93) of the thermal storage medium circuit (92) is operated, and the thermal storage medium circulates between the thermal storage tank (91) and the thermal-storage-side heat exchanger (31). Moreover, in the heat-storage air-heating operation, the hot water supplier (70) is stopped. Further, in the heat-storage air-heating operation, the outdoor fan (11) and the indoor fan (12) are operated.

The refrigerant circuit (15) performs the refrigeration cycle such that the utilization-side heat exchanger (36) serves as a condenser (i.e., a radiator), that the thermal-storage-side heat exchanger (31) serves as a sub-cooler (i.e., a radiator), and that the heat-source-side heat exchanger (21) serves as an evaporator. Specifically, in the refrigerant circuit (15), the compressor (16) is operated, and the four-way valve (17) is set to the second state. The utilization-side expansion valve (37) is held in the fully-open state. Moreover, the opening degree of the heat-source-side expansion valve (22) is adjusted such that the superheat degree of refrigerant at an outlet of the heat-source-side heat exchanger (21) reaches a predetermined target value.

In the refrigerant circuit (15), the first bypass path (41) is set to the second state. In the first bypass path (41) set to the second state, each three-way valve (61, 62, 63, 64) is in the state as in the second cold-storage operation.

In the refrigerant circuit (15), the second bypass path (42) is set to the third state. In the second bypass path (42) set to the third state, each three-way valve (65, 66, 67, 68) is in the state as in the first cold-used air-cooling operation.

A flow of refrigerant in the refrigerant circuit (15) will be described. Refrigerant discharged from the compressor (16) flows into the utilization-side pipe (35) through the four-way valve (17). The refrigerant flowing into the utilization-side pipe (35) is condensed by dissipating heat to room air while passing through the utilization-side heat exchanger (36). The room air heated in the utilization-side heat exchanger (36) is supplied to the inside of the room. The refrigerant having passed through the utilization-side heat exchanger (36) flows into the thermal-storage-side pipe (30) through the utilization-side expansion valve (37). Then, the refrigerant flows into each primary flow path (32) of the thermal-storage-side heat exchanger (31). In the thermal-storage-side heat exchanger (31), the refrigerant flowing through each primary flow path (32) dissipates heat to the thermal storage medium flowing through a corresponding one of the secondary flow paths (33). The refrigerant flowing out from the thermal-storage-side heat exchanger (31) passes through the connection pipe (18), the second bypass pipe (52), and the third bypass pipe (53) in this order, and then flows into the heat-source-side pipe (20). The pressure of the refrigerant flowing into the heat-source-side pipe (20) is reduced while the refrigerant passes through the heat-source-side expansion valve (22). Subsequently, the refrigerant flows into the heat-source-side heat exchanger (21), and is evaporated by absorbing heat from outdoor air. The refrigerant having passed through the heat-source-side heat exchanger (21) is sucked into the compressor (16) through the four-way valve (17). The compressor (16) compresses the sucked refrigerant, and discharges the compressed refrigerant.

In the heat-storage air-heating operation, the pump (93) of the thermal storage medium circuit (92) is operated, and the thermal storage medium circulates between the thermal storage tank (91) and the thermal-storage-side heat exchanger (32). The thermal storage medium of the thermal storage tank (91) is sent to each secondary flow path (33) of the thermal-storage-side heat exchanger (31) by the pump (93), and is heated with refrigerant flowing through a corresponding one of the primary flow paths (32) of the thermal-storage-side heat exchanger (31). The thermal storage medium heated in the thermal-storage-side heat exchanger (31) is sent back to the thermal storage tank (91). Thus, hot thermal energy remaining in refrigerant flowing out from the utilization-side heat exchanger (36) is stored in the thermal storage tank (91).

### <Water-Heating Operation>

The water-heating operation will be described. In the water-heating operation, the hot water supply air conditioning system (10) is operated as in the first cold-storage operation illustrated in FIG. 2. During the water-heating operation, in the hot water supply air conditioning system (10), the hot water supplier (70) heats water of the hot water storage tank (71) using hot thermal energy stored in the thermal storage tank (91).

Specifically, hot thermal energy contained in the thermal storage medium of the thermal storage tank (91) is provided to refrigerant of the refrigerant circuit (15) in the thermal-storage-side heat exchanger (31). The refrigerant of the refrigerant circuit (15) carries the hot thermal energy received in the thermal-storage-side heat exchanger (31) to the hot-water-supply-side heat exchanger (26), and then provides the hot thermal energy to refrigerant of the hot water supply refrigerant circuit (80). Then, in the hot water supplier (70), the hot water supply refrigerant circuit (80) performs a refrigeration cycle such that water of the hot water storage tank (71) is heated in the heating heat exchanger (83).

### <Heat-Used Air-Heating Operation>

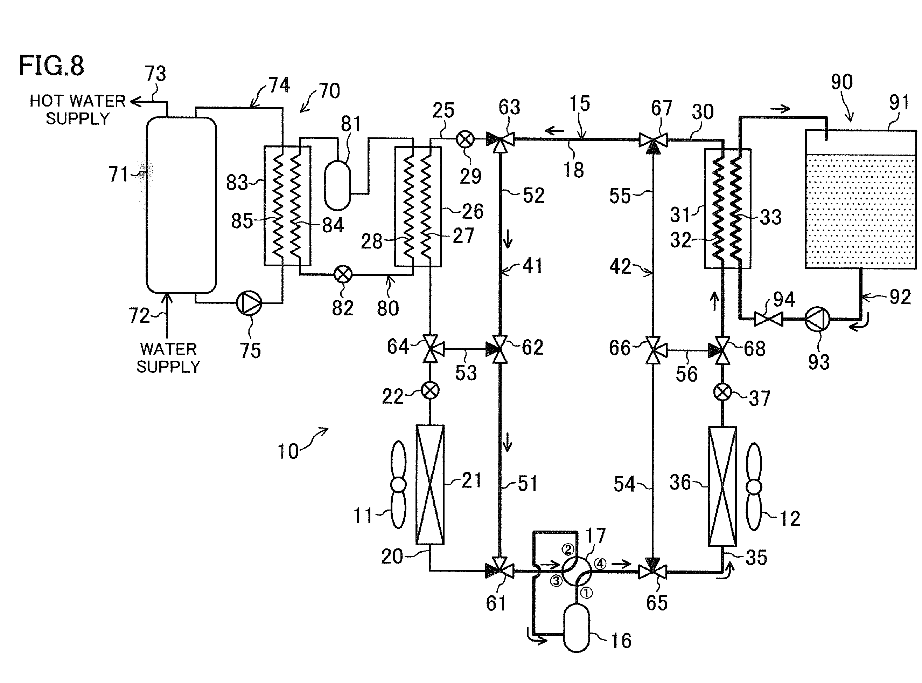

The heat-used air-heating operation will be described with reference to FIG. 8. In the heat-used air-heating operation, only hot thermal energy stored in the thermal storage tank (91) is used to heat room air. In the heat-used air-heating operation, the pump (93) of the thermal storage medium circuit (92) is operated, and the thermal storage medium circulates between the thermal storage tank (91) and the thermal-storage-side heat exchanger (31). Moreover, in the heat-used air-heating operation, the hot water supplier (70) is stopped. Further, in the heat-used air-heating operation, the outdoor fan (11) is stopped, and the indoor fan (12) is operated.

The refrigerant circuit (15) performs a refrigeration cycle such that the utilization-side heat exchanger (36) serves as a condenser (i.e., a radiator) and that the thermal-storage-side heat exchanger (31) serves as an evaporator. Specifically, in the refrigerant circuit (15), the compressor (16) is operated, and the four-way valve (17) is set to the second state. The opening degree of the utilization-side expansion valve (37) is adjusted such that the superheat degree of refrigerant at an outlet of the thermal-storage-side heat exchanger (31) reaches a predetermined target value.

In the refrigerant circuit (15), the first bypass path (41) is set to the third state. In the first bypass path (41) set to the third state, each three-way valve (61, 62, 63, 64) is in the state as in the first cold-used air-cooling operation.

In the refrigerant circuit (15), the second bypass path (42) is set to the third state. In the second bypass path (42) set to the third state, each three-way valve (65, 66, 67, 68) is in the state as in the first cold-used air-cooling operation.

A flow of refrigerant in the refrigerant circuit (15) will be described. Refrigerant discharged from the compressor (16) flows into the utilization-side pipe (35) through the four-way valve (17). Then, the refrigerant flows into the utilization-side heat exchanger (36), and is condensed by dissipating heat to room air. The room air heated in the utilization-side heat exchanger (36) is supplied to the inside of the room. The refrigerant flowing out from the utilization-side heat exchanger (36) flows into the thermal-storage-side pipe (30) through the utilization-side expansion valve (37). Subsequently, the refrigerant flows into each primary flow path (32) of the thermal-storage-side heat exchanger (31), and is evaporated by absorbing heat from the thermal storage medium flowing through a corresponding one of the secondary flow paths (33) of the thermal-storage-side heat exchanger (31). The refrigerant flowing out from the thermal-storage-side heat exchanger (31) passes through the connection pipe (18), the second bypass pipe (52), the first bypass pipe (51), and the four-way valve (17) in this order, and then is sucked into the compressor (16). The compressor (16) compresses the sucked refrigerant, and discharges the compressed refrigerant.

As just described, in the heat-used air-heating operation, the pump (93) of the thermal storage medium circuit (92) is operated, and the thermal storage medium circulates between the thermal storage tank (91) and the thermal-storage-side heat exchanger (31). The thermal storage medium of the thermal storage tank (91) is sent to each secondary flow path (33) of the thermal-storage-side heat exchanger (31) by the pump (93), and dissipates heat to refrigerant flowing through a corresponding one of the primary flow paths (32) of the thermal-storage-side heat exchanger (31). The thermal storage medium having passed through the secondary flow paths (33) of the thermal-storage-side heat exchanger (31) is sent back to the thermal storage tank (91).

### <Simple Air-Heating Operation>

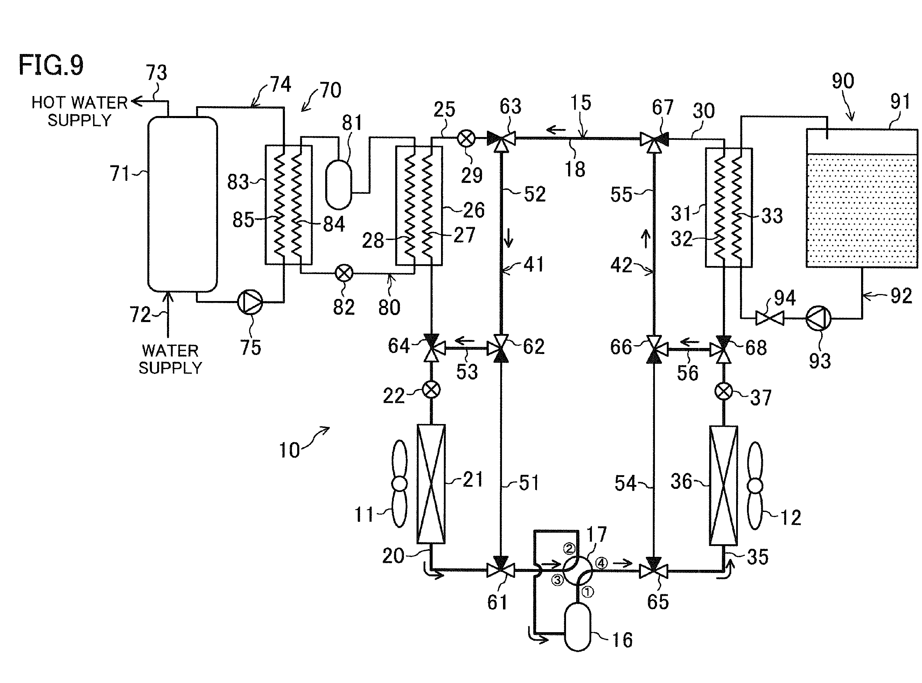

The simple air-heating operation will be described with reference to FIG. 9. In the simple air-heating operation, only hot thermal energy obtained by a refrigeration cycle performed by the refrigerant circuit (15) is used to heat room air. In the simple air-heating operation, the hot water supplier (70) and the thermal storage (90) are stopped. Moreover, in the simple air-heating operation, the outdoor fan (11) and the indoor fan (12) are operated.

The refrigerant circuit (15) performs the refrigeration cycle such that the utilization-side heat exchanger (36) serves as a condenser (i.e., a radiator) and that the heat-source-side heat exchanger (21) serves as an evaporator. Specifically, in the refrigerant circuit (15), the compressor (16) is operated, and the four-way valve (17) is set to the second state. The utilization-side expansion valve (37) is held in the fully-open state. Moreover, the opening degree of the heat-source-side expansion valve (22) is adjusted such that the superheat degree of refrigerant at the outlet of the heat-source-side heat exchanger (21) reaches a predetermined target value.

In the refrigerant circuit (15), the first bypass path (41) is set to the second state. In the first bypass path (41) set to the second state, each three-way valve (61, 62, 63, 64) is in the state as in the second cold-storage operation.

In the refrigerant circuit (15), the second bypass path (42) is set to the second state. In the second bypass path (42) set to the second state, each three-way valve (65, 66, 67, 68) is in the state as in the simple air-cooling operation.

A flow of refrigerant in the refrigerant circuit (15) will be described. Refrigerant discharged from the compressor (16) flows into the utilization-side pipe (35) through the four-way valve (17). The refrigerant flowing into the utilization-side pipe (35) is condensed by dissipating heat to room air while passing through the utilization-side heat exchanger (36). The room air heated in the utilization-side heat exchanger (36) is supplied to the inside of the room. The refrigerant having passed through the utilization-side heat exchanger (36) passes through the utilization-side expansion valve (37), the sixth bypass pipe (56), the fifth bypass pipe (55), the connection pipe (18), the second bypass pipe (52), and the third bypass pipe (53) in this order, and then flows into the heat-source-side pipe (20). The pressure of the refrigerant flowing into the heat-source-side pipe (20) is reduced while the refrigerant passes through the heat-source-side expansion valve (22). Subsequently, the refrigerant flows into the heat-source-side heat exchanger (21), and is evaporated by absorbing heat from outdoor air. The refrigerant having passed through the heat-source-side heat exchanger (21) is sucked into the compressor (16) through the four-way valve (17). The compressor (16) compresses the sucked refrigerant, and discharges the compressed refrigerant.

### <Operations in Season Requiring Air-Cooling>

In the season requiring air-cooling, such as the summer season, the hot water supply air conditioning system (10) performs the first cold-storage operation, the second cold-storage operation, the first cold-used air-cooling operation, the second cold-used air-cooling operation, and the simple air-cooling operation.

The first and second cold-storage operations are performed during the midnight during which the cost for electricity is low. On the other hand, the first and second cold-used air-cooling operations and the simple air-cooling operation are mainly performed from the daytime to the late afternoon.

In the air-cooling season, the hot water supply air conditioning system (10) inevitably performs the first cold-storage operation during the midnight. As described above, during the first cold-storage operation, in the hot water supply air conditioning system (10), the refrigerant circuit (15) performs the refrigeration cycle, the hot water supplier (70) heats water of the hot water storage tank (71), and cold thermal energy obtained by the refrigerant cycle performed by the refrigerant circuit (15) is stored in the thermal storage tank (91) of the thermal storage (90).

When the temperature of almost all of water of the hot water storage tank (71) reaches a high temperature of about 80°C to 90 °C, or the amount of high-temperature water of the hot water storage tank (71) reaches the amount covering the amount of hot water required for the following day, the first cold-storage operation is terminated. During the summer season during which the demand for hot water supply is relatively low and an air cooling load is high, it is often the case that the air cooling load during the day cannot be completely processed using only cold thermal energy stored in the thermal storage tank (91) in the first cold-storage operation. In such a case, the hot water supply air conditioning system (10) performs the second cold-storage operation after the first cold-storage operation is terminated.

During the second cold-storage operation, in the hot water supply air conditioning system (10), refrigerant of the refrigerant circuit (15) absorbs heat from the thermal storage medium, and dissipates the heat to outdoor air as described above. Thus, cold thermal energy can be stored in the thermal storage tank (91) regardless of the amount of high-temperature water of the hot water storage tank (71). The hot water supply air conditioning system (10) of the present embodiment performs the first and second cold-storage operations during the midnight to ensure a sufficient amount of cold thermal energy stored in the thermal storage tank (91).

The first and second cold-used air-cooling operations are for cooling room air using cold thermal energy stored in the thermal storage tank (91) in the first and second cold-storage operations. The power consumption in the hot water supply air conditioning system (10) in the first or second cold-used air-cooling operation is lower than the power consumption in the hot water supply air conditioning system (10) in the simple air-cooling operation for cooling air using only cold thermal energy obtained by the refrigeration cycle performed by the refrigerant circuit (15). Thus, the power consumption in the hot water supply air conditioning system (10) from the daytime to the late afternoon, i.e., during the time during which the cost for electricity is high, decreases, and therefore the running cost for the hot water supply air conditioning system (10) is reduced.

Ever after cold thermal energy stored in the thermal storage tank (91) is completely used, it is sometimes necessary to further cool room air. In such a case, the hot water supply air conditioning system (10) performs the simple air-cooling operation.

### <Operations in Season Requiring Air-Heating>

In the season requiring air-heating, such as the winter season, the hot water supply air conditioning system (10) performs the heat-storage air-heating operation, the water-heating operation, the heat-used air-heating operation, and the simple air-heating operation.

During the heat-storage air-heating operation, in the hot water supply air conditioning system (10), hot thermal energy is stored in the thermal storage tank (91) of the thermal storage (90) as described above. During the water-heating operation or the heat-used air-heating operation, the hot water supply air conditioning system (10) perform the foregoing operations using hot thermal energy stored in the thermal storage tank (91) in the heat-storage air-heating operation.

Ever after hot thermal energy stored in the thermal storage tank (91) is completely used, it is sometimes necessary to further heat room air. In such a case, the hot water supply air conditioning system (10) performs the simple air-heating operation.

### Advantages of First Embodiment

The hot water supply air conditioning system (10) of the present embodiment selectively performs the first and second cold-storage operations. During the first cold-storage operation, the refrigeration cycle is performed in the refrigerant circuit (15), the hot water supplier (70) heats water of the hot water storage tank (71) using heat dissipated from refrigerant in the hot-water-supply-side heat exchanger (26), and cold thermal energy obtained in the thermal-storage-side heat exchanger (31) is stored in the thermal storage tank (91) of the thermal storage (90). On the other hand, during the second cold-storage operation, the refrigeration cycle is performed in the refrigerant circuit (15), refrigerant dissipates heat to outdoor air in the heat-source-side heat exchanger (21), and cold thermal energy obtained in the thermal-storage-side heat exchanger (31) is stored in the thermal storage tank (91) of the thermal storage (90).

As described above, when the amount of high-temperature water of the hot water storage tank (71) reaches the required amount, the first cold-storage operation should be terminated. However, in the hot water supply air conditioning system (10) of the present embodiment, since the second cold-storage operation is performed, cold thermal energy can be further stored in the thermal storage tank (91) of the thermal storage (90) even after the first cold-storage operation is terminated. Thus, according to the present embodiment, the thermal storage tank (91) of the thermal storage (90) can store not only cold thermal energy obtained when water of the hot water storage tank (71) is heated, but also cold thermal energy obtained when refrigerant of the refrigerant circuit (15) dissipates heat to outdoor air.

Thus, according to the present embodiment, since the first and second cold-storage operations are performed during the midnight during which the cost for electricity is low, a sufficient amount of cold thermal energy required for the cold-used air-cooling operations during the day can be stored in the thermal storage tank (91). As a result, the amount of power consumed in room air cooling during the day can be efficiently reduced, and the running cost for the hot water supply air conditioning system (10) can be sufficiently reduced.

### «Second Embodiment of the Invention»

A second embodiment of the present disclosure will be described. In a hot water supply air conditioning system (10) of the present embodiment, the configuration and arrangement of a thermal-storage-side heat exchanger (31) is changed from those of the hot water supply air conditioning system (10) of the first embodiment. Differences of the hot water supply air conditioning system (10) of the present embodiment from that of the first embodiment will be described.

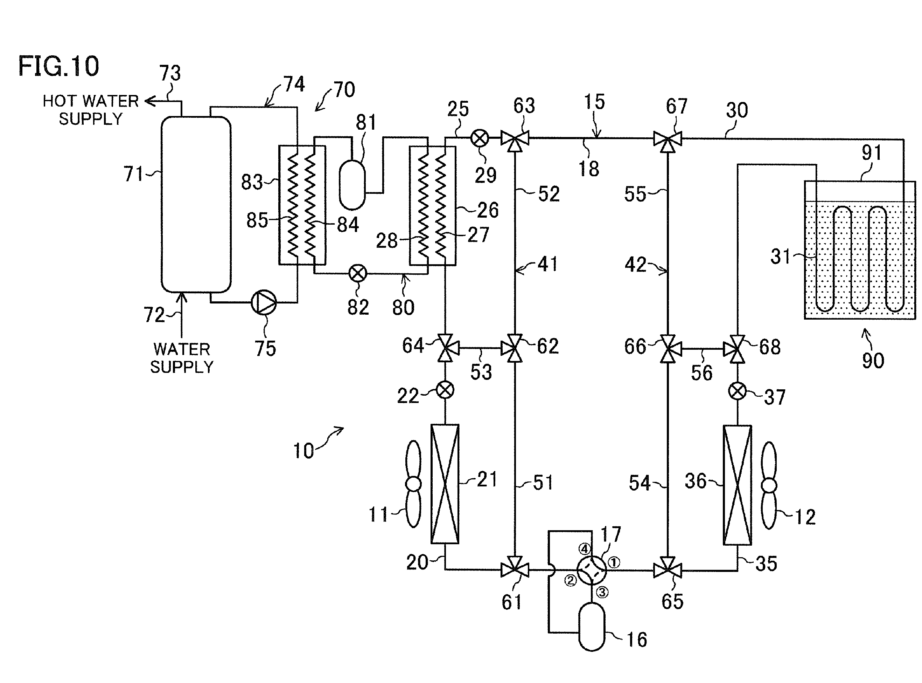

Referring to FIG. 10, the thermal-storage-side heat exchanger (31) of the present embodiment is a heat transfer pipe meandering up and down. Moreover, the thermal-storage-side heat exchanger (31) is disposed inside a thermal storage tank (91) of a thermal storage (90), and is soaked in a thermal storage medium. Water is stored in the thermal storage tank (91) of the present embodiment as the thermal storage medium.

In the thermal storage (90) of the present embodiment, cold thermal energy is stored in such a manner that water stored in the thermal storage tank (91) as the thermal storage medium is frozen. That is, in first and second cold-storage operations in which the thermal-storage-side heat exchanger (31) serves as an evaporator, water of the thermal storage tank (91) is cooled with refrigerant flowing through the thermal-storage-side heat exchanger (31), and water around the thermal-storage-side heat exchanger (31) is frozen to ice. In first and second cold-used air-cooling operations, refrigerant flowing through the thermal-storage-side heat exchanger (31) is cooled with ice of the thermal storage tank (91), thereby melting the ice.

### «Third Embodiment of the Invention»

A third embodiment of the present disclosure will be described. In a hot water supply air conditioning system (10) of the present embodiment, the configuration of a hot water supplier (70) is changed from that of the hot water supply air conditioning system (10) of the first embodiment. Differences of the hot water supply air conditioning system (10) of the present embodiment from that of the first embodiment will be described.

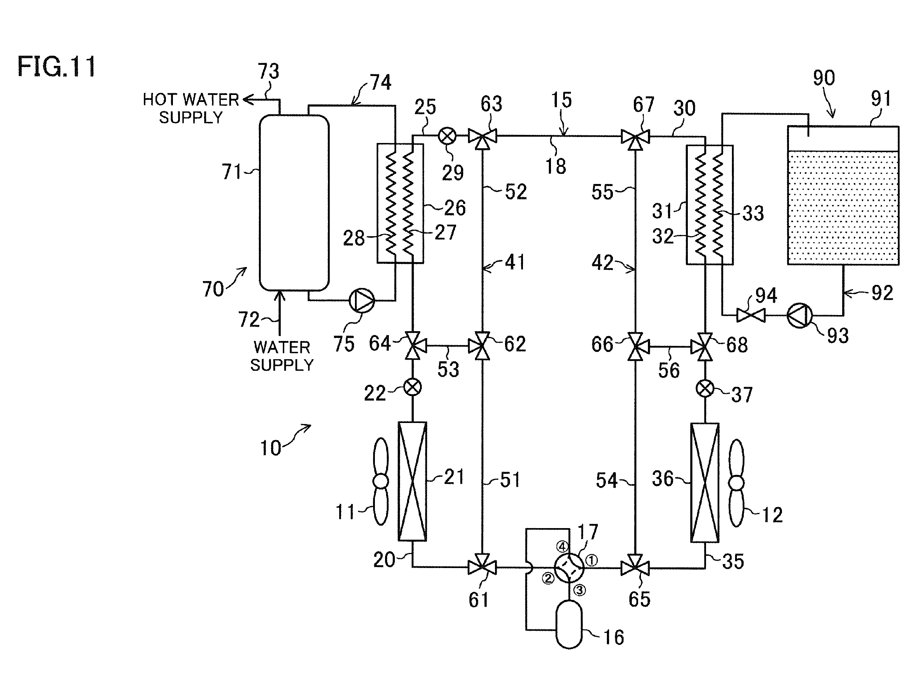

Referring to FIG. 11, in the hot water supplier (70) of the present embodiment, a hot water supply refrigerant circuit (80) is omitted, and a water circuit (74) is connected to each secondary flow path (28) of a hot-water-supply-side heat exchanger (26). Thus, water flowing from a hot water storage tank (71) to the water circuit (74) flows into each secondary flow path (28) of the hot-water-supply-side heat exchanger (26), and then is heated with refrigerant flowing through a corresponding one of primary flow paths (27) of the hot-water-supply-side heat exchanger (26) in a refrigerant circuit (15). The water flowing out from the secondary flow paths (28) of the hot-water-supply-side heat exchanger (26) is sent back to a top part of the hot water storage tank (71).

### «Fourth Embodiment of the Invention»

A fourth embodiment of the present disclosure will be described. In a hot water supply air conditioning system (10) of the present embodiment, the configuration of a refrigerant circuit (15) and the configuration and arrangement of a thermal-storage-side heat exchanger (31) are changed from those of the hot water supply air conditioning system (10) of the first embodiment. Differences of the hot water supply air conditioning system (10) of the present embodiment from that of the first embodiment will be described.

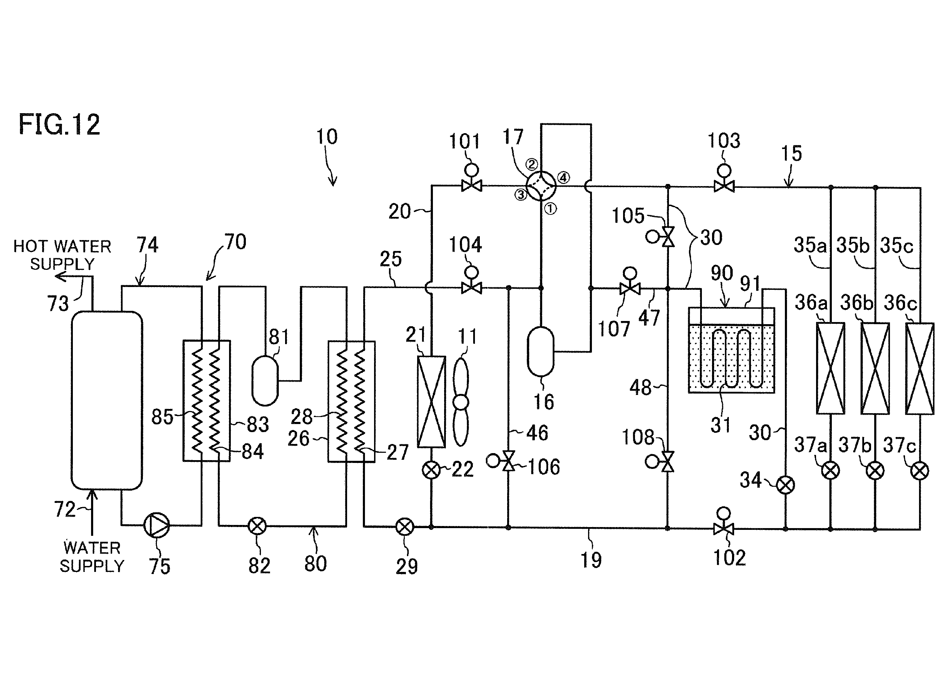

Referring to FIG. 12, the refrigerant circuit (15) of the present embodiment includes three connection pipes (46-48) and eight solenoid valves (101-108), instead of including bypass pipes (51-56) and three-way valves (61-68). Moreover, in the refrigerant circuit (15) of the present embodiment, three utilization-side pipes (35a-35c) are provided. The utilization-side pipes (35a-35c) are connected together in parallel. Further, in the refrigerant circuit (15) of the present embodiment, a thermal-storage-side expansion valve (34) is provided.

In the refrigerant circuit (15) of the present embodiment, a compressor (16) is, on a discharge side thereof, connected to a first port of a four-way valve (17), and is, on a suction side thereof, connected to a second port of the four-way valve (17). The refrigerant circuit (15) of the present embodiment is the same as that of the first embodiment on this point. In the refrigerant circuit (15), the first solenoid valve (101), a heat-source-side heat exchanger (21), a heat-source-side expansion valve (22), the second solenoid valve (102), the utilization-side pipes (35a-35c), and the third solenoid valve (103) are arranged in this order from a third port to a fourth port of the four-way valve (17).

In each utilization-side pipe (35a-35c), a corresponding one of utilization-side heat exchangers (36a-36c) and a corresponding one of utilization-side expansion valves (37a-37c) are arranged in this order from one end to the other end of the utilization-side pipe (35a-35c). That is, the utilization-side expansion valve (37a-37c) is disposed on a liquid side of the utilization-side heat exchanger (36a-36c) in the utilization-side pipe (35a-35c). An end of each utilization-side pipe (35a-35c) close to a corresponding one of the utilization-side heat exchangers (36a-36c) is connected to the third solenoid valve (103), and another end of each utilization-side pipe (35a-35c) close to a corresponding one of the utilization-side expansion valves (37a-37c) is connected to the second solenoid valve (102). Although not shown in FIG. 12, an indoor fan is provided for each utilization-side heat exchanger (36a-36c) in the hot water supply air conditioning system (10) of the present embodiment. Each indoor fan supplies room air to a corresponding one of the utilization-side heat exchangers (36a-36c).

In a hot-water-supply-side pipe (25), the fourth solenoid valve (104), a hot-water-supply-side heat exchanger (26), and a hot-water-supply-side expansion valve (29) are arranged in this order from one end to the other end of the hot-water-supply-side pipe (25). An end of the hot-water-supply-side pipe (25) close to the fourth solenoid valve (104) is connected to a pipe connecting between the compressor (16) and the first port of the four-way valve (17), and another end of the hot-water-supply-side pipe (25) close to the hot-water-supply-side expansion valve (29) is connected to a pipe (19) connecting between the heat-source-side expansion valve (22) and the second solenoid valve (102).

Part of the refrigerant circuit (15) of the present embodiment from the third port of the four-way valve (17) to a connection part between the pipe (19) and the hot-water-supply-side pipe (25) forms a heat-source-side pipe (20).

In a thermal-storage-side pipe (30), the fifth solenoid valve (105), the thermal-storage-side heat exchanger (31), and the thermal-storage-side expansion valve (34) are arranged in this order from one end to the other end of the thermal-storage-side pipe (30). An end of the thermal-storage-side pipe (30) close to the fifth solenoid valve (105) is connected to a pipe connecting between the third solenoid valve (103) and the fourth port of the four-way valve (17), and another end of the thermal-storage-side pipe (30) close to the thermal-storage-side expansion valve (34) is connected to a pipe connecting between the second solenoid valve (102) and each utilization-side pipe (35a-35c). The thermal-storage-side expansion valve (34) is an electric expansion valve whose opening degree is variable.

The thermal-storage-side heat exchanger (31) of the present embodiment is a heat transfer pipe meandering up and down. The thermal-storage-side heat exchanger (31) is disposed inside a thermal storage tank (91) of a thermal storage (90), and is soaked in a thermal storage medium. Water is stored in the thermal storage tank (91) of the present embodiment as the thermal storage medium.

One end of the first connection pipe (46) is connected between one end of the hot-water-supply-side pipe (25) and the fourth solenoid valve (104), and the other end of the first connection pipe (46) is connected to the pipe (19) connecting between the heat-source-side expansion valve (22) and the second solenoid valve (102). A connection part between the pipe (19) and the first connection pipe (46) is closer to the second solenoid valve (102) than is to a connection part between the pipe (19) and the thermal-storage-side pipe (30). The sixth solenoid valve (106) is provided in the first connection pipe (46).

One end of the second connection pipe (47) is connected to part of the thermal-storage-side pipe (30) between the fifth solenoid valve (105) and the thermal-storage-side heat exchanger (31), and the other end of the second connection pipe (47) is connected to a pipe connecting between the compressor (16) and the second port of the four-way valve (17). The seventh solenoid valve (107) is provided in the second connection pipe (47).

One end of the third connection pipe (48) is connected to part of the thermal-storage-side pipe (30) between the fifth solenoid valve (105) and the thermal-storage-side heat exchanger (31), and the other end of the third connection pipe (48) is connected to the pipe (19) connecting between the heat-source-side expansion valve (22) and the second solenoid valve (102). A connection part between the pipe (19) and the third connection pipe (48) is closer to the second solenoid valve (102) than is to the connection part between the pipe (19) and the first connection pipe (46). The eighth solenoid valve (108) is provided in the third connection pipe (48).

### Operations

Operations of the hot water supply air conditioning system (10) will be described. The hot water supply air conditioning system (10) of the present embodiment performs various operations as described below.

### <First Cold-Storage Operation>

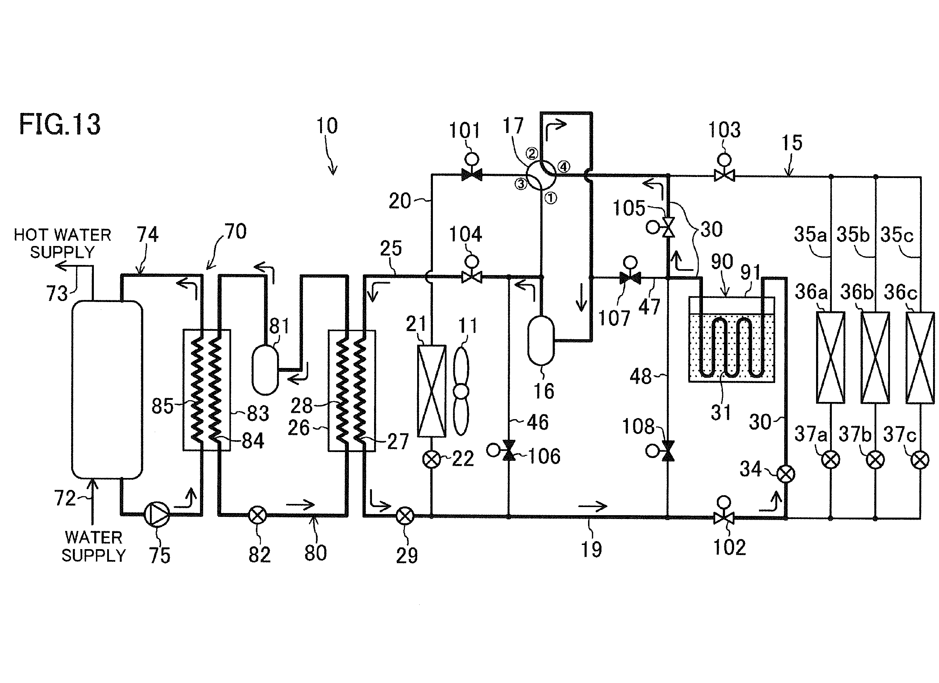

A first cold-storage operation will be described with reference to FIG. 13. As in the first embodiment, the hot water supply air conditioning system (10) performs a first operation in the first cold-storage operation. That is, a hot water supplier (70) performs the operation for heating water of a hot water storage tank (71), and the thermal storage (90) performs the operation for storing cold thermal energy obtained by operation of the hot water supplier (70) in the thermal storage tank (91). Moreover, in the first cold-storage operation, an outdoor fan (11) and each indoor fan are stopped.

The refrigerant circuit (15) performs a refrigeration cycle such that the hot-water-supply-side heat exchanger (26) serves as a condenser (i.e., a radiator) and that the thermal-storage-side heat exchanger (31) serves as an evaporator. In the refrigerant circuit (15), the compressor (16) is operated, and the four-way valve (17) is set to a first state. The hot-water-supply-side expansion valve (29) is held in a fully-open state, and the heat-source-side expansion valve (22) and each utilization-side expansion valve (37a-37c) are held in a fully-closed state. The opening degree of the thermal-storage-side expansion valve (34) is adjusted such that the superheat degree of refrigerant at an outlet of the thermal-storage-side heat exchanger (31) reaches a predetermined target value. The second solenoid valve (102), the third solenoid valve (103), the fourth solenoid valve (104), and the fifth solenoid valve (105) are in an open state, whereas the first solenoid valve (101), the sixth solenoid valve (106), the seventh solenoid valve (107), and the eighth solenoid valve (108) are in a closed state.

A flow of refrigerant in the refrigerant circuit (15) will be described. Refrigerant discharged from the compressor (16) flows into the hot-water-supply-side pipe (25). The refrigerant flowing into the hot-water-supply-side pipe (25) is condensed by dissipating heat while passing through each primary flow path (27) of the hot-water-supply-side heat exchanger (26), and then flows into the thermal-storage-side pipe (30). The pressure of the refrigerant flowing into the thermal-storage-side pipe (30) is reduced while the refrigerant passes through the thermal-storage-side expansion valve (34), and then the refrigerant flows into the thermal-storage-side heat exchanger (31). The refrigerant flowing through the thermal-storage-side heat exchanger (31) is evaporated by absorbing heat from water of the thermal storage tank (91). The refrigerant flowing out from the thermal-storage-side heat exchanger (31) is sucked into the compressor (16) through the four-way valve (17). The compressor (16) compresses the sucked refrigerant, and discharges the compressed refrigerant.

In the first cold-storage operation, a hot water supply compressor (81) of the hot water supplier (70) is operated, and a hot water supply refrigerant circuit (80) performs a refrigeration cycle. At this point, the opening degree of a hot water supply expansion valve (82) is adjusted such that the superheat degree of refrigerant at an outlet of each secondary flow path (28) of the hot-water-supply-side heat exchanger (26) reaches a predetermined target value. Moreover, in the first cold-storage operation, a pump (75) of a water circuit (74) is operated, and water circulates between a hot water storage tank (71) and a heating heat exchanger (83).

A flow of refrigerant in the hot water supply refrigerant circuit (80) will be described. Refrigerant discharged from the hot water supply compressor (81) is condensed by dissipating heat while passing through each primary flow path (84) of the heating heat exchanger (83). The pressure of the refrigerant flowing out from the heating heat exchanger (83) is reduced while the refrigerant passes through the hot water supply expansion valve (82), and then the refrigerant flows into each secondary flow path (28) of the hot-water-supply-side heat exchanger (26). The refrigerant flowing through each secondary flow path (28) of the hot-water-supply-side heat exchanger (26) is evaporated by absorbing heat from refrigerant flowing through a corresponding one of the primary flow paths (27) of the hot-water-supply-side heat exchanger (26). Then, the refrigerant is sucked into the hot water supply compressor (81). The hot water supply compressor (81) compresses the sucked refrigerant, and discharges the compressed refrigerant.

A flow of water in the water circuit (74) will be described. Low-temperature water in a bottom part of the thermal storage tank (91) is sent to each secondary flow path (85) of the heating heat exchanger (83) by the pump (75), and then is heated with refrigerant flowing through a corresponding one of the primary flow paths (84) of the heating heat exchanger (83). Then, water heated to a high temperature is sent back to a top part of the hot water storage tank (71).

In the first cold-storage operation, water of the thermal storage tank (91) is cooled with refrigerant flowing through the thermal-storage-side heat exchanger (31), and then water around the thermal-storage-side heat exchanger (31) is frozen to ice. As a result, cold thermal energy is stored in the thermal storage tank (91).

### <Second Cold-Storage Operation>

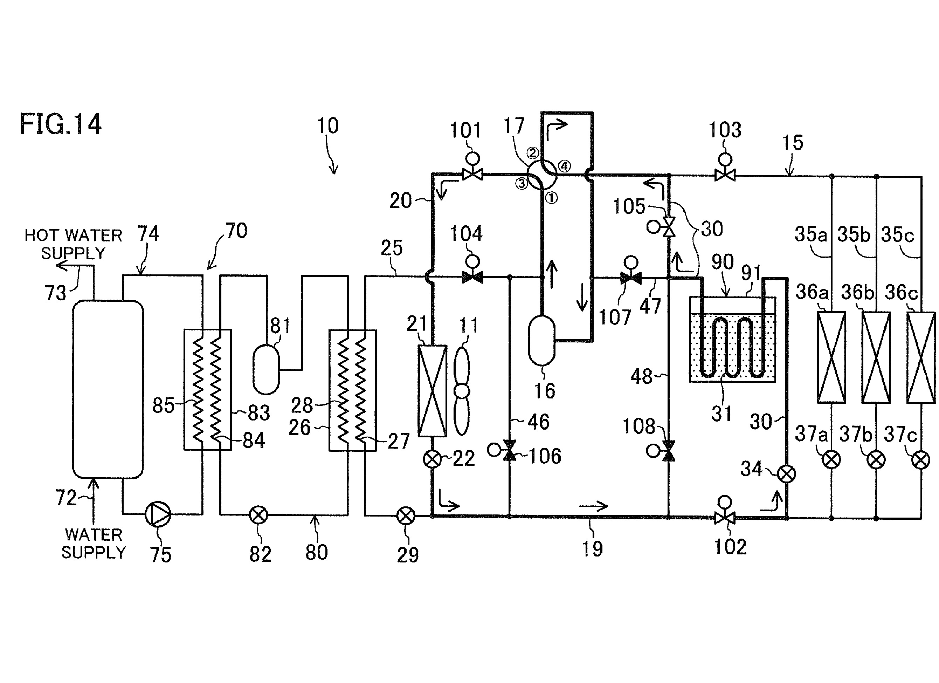

A second cold-storage operation will be described with reference to FIG. 14. As in the first embodiment, the hot water supply air conditioning system (10) performs a second operation in the second cold-storage operation. That is, in the hot water supply air conditioning system (10), the hot water supplier (70) is stopped, and the thermal storage (90) performs the operation for storing cold thermal energy in the thermal storage tank (91). Moreover, in the second cold-storage operation, the outdoor fan (11) is operated, and each indoor fan is stopped.

The refrigerant circuit (15) performs a refrigeration cycle such that the heat-source-side heat exchanger (21) serves as a condenser (i.e., a radiator) and that the thermal-storage-side heat exchanger (31) serves as an evaporator. In the refrigerant circuit (15), the compressor (16) is operated, and the four-way valve (17) is set to the first state. The heat-source-side expansion valve (22) is held in a fully-open state, and the hot-water-supply-side expansion valve (29) and each utilization-side expansion valve (37a-37c) are held in a fully-closed state. The opening degree of the thermal-storage-side expansion valve (34) is adjusted such that the superheat degree of refrigerant at the outlet of the thermal-storage-side heat exchanger (31) reaches a predetermined target value. The first solenoid valve (101), the second solenoid valve (102), the third solenoid valve (103), and the fifth solenoid valve (105) are in an open state, whereas the fourth solenoid valve (104), the sixth solenoid valve (106), the seventh solenoid valve (107), and the eighth solenoid valve (108) are in a closed state.

A flow of refrigerant in the refrigerant circuit (15) will be described. Refrigerant discharged from the compressor (16) flows into the heat-source-side pipe (20) through the four-way valve (17). The refrigerant flowing into the heat-source-side pipe (20) is condensed by dissipating heat to outdoor air while passing through the heat-source-side heat exchanger (21), and then flows into the thermal-storage-side pipe (30). The pressure of the refrigerant flowing into the thermal-storage-side pipe (30) is reduced while the refrigerant passes through the thermal-storage-side expansion valve (34), and then the refrigerant flows into the thermal-storage-side heat exchanger (31). The refrigerant flowing through the thermal-storage-side heat exchanger (31) is evaporated by absorbing heat from water of the thermal storage tank (91). The refrigerant flowing out from the thermal-storage-side heat exchanger (31) is sucked into the compressor (16) through the four-way valve (17). The compressor (16) compresses the sucked refrigerant, and discharges the compressed refrigerant.

In the second cold-storage operation, the thermal storage (90) performs the operation for storing cold thermal energy in the thermal storage tank (91). Such an operation is the same as that performed by the thermal storage (90) in the first cold-storage operation.

### <Third Cold-Storage Operation>

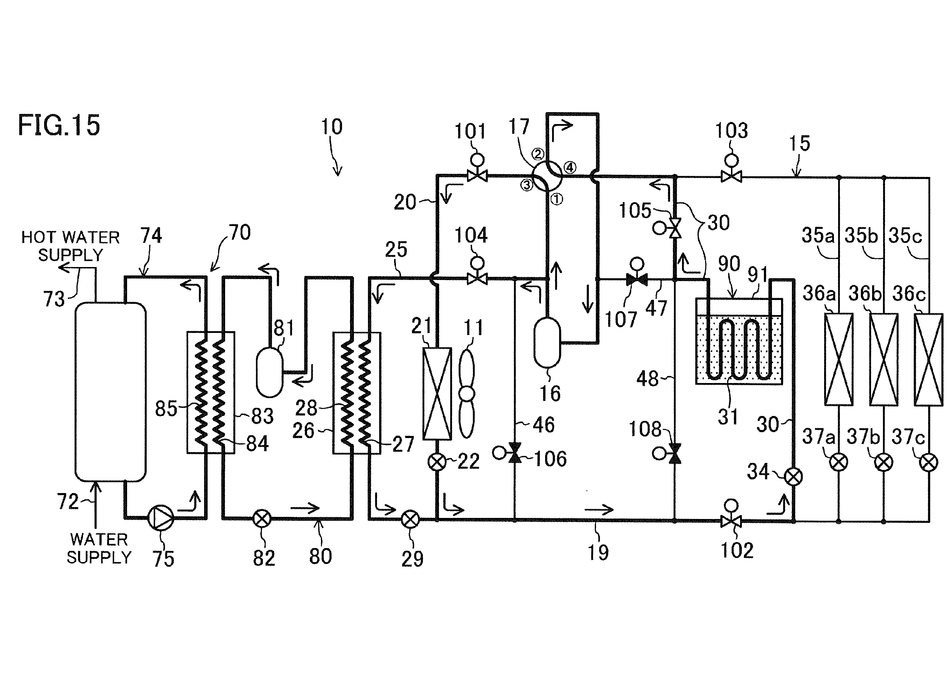

A third cold-storage operation will be described with reference to FIG. 15. In the hot water supply air conditioning system (10), the hot water supplier (70) performs the operation for heating water of the hot water storage tank (71), and the thermal storage (90) stores cold thermal energy obtained by the operation of the hot water supplier (70) in the thermal storage tank (91). Moreover, in the third cold-storage operation, the outdoor fan (11) is operated, and each indoor fan is stopped.

The refrigerant circuit (15) performs a refrigeration cycle such that both of the heat-source-side heat exchanger (21) and the hot-water-supply-side heat exchanger (26) serve as condensers (i.e., radiators) and that the thermal-storage-side heat exchanger (31) serves as an evaporator. In the refrigerant circuit (15), the compressor (16) is operated, and the four-way valve (17) is set to the first state. The heat-source-side expansion valve (22) and the hot-water-supply-side expansion valve (29) are held in a fully-open state, and each utilization-side expansion valve (37a-37c) is held in a fully-closed state. The opening degree of the thermal-storage-side expansion valve (34) is adjusted such that the superheat degree of refrigerant at the outlet of the thermal-storage-side heat exchanger (31) reaches a predetermined target value. The first solenoid valve (101), the second solenoid valve (102), the third solenoid valve (103), the fourth solenoid valve (104), and the fifth solenoid valve (105) are in an open state, whereas the sixth solenoid valve (106), the seventh solenoid valve (107), and the eighth solenoid valve (108) are in a closed state.

A flow of refrigerant in the refrigerant circuit (15) will be described. Part of refrigerant discharged from the compressor (16) flows into the hot-water-supply-side pipe (25), the remaining part of the refrigerant flows into the heat-source-side pipe (20) through the four-way valve (17). The refrigerant flowing into the hot-water-supply-side pipe (25) is condensed by dissipating heat while passing through each primary flow path (27) of the hot-water-supply-side heat exchanger (26). Meanwhile, the refrigerant flowing into the heat-source-side pipe (20) is condensed by dissipating heat to outdoor air while passing through the heat-source-side heat exchanger (21). The refrigerant having passed through the hot-water-supply-side pipe (25) and the refrigerant having passed through the heat-source-side pipe (20) are joined together, and then flows into the thermal-storage-side pipe (30). The pressure of the refrigerant flowing into the thermal-storage-side pipe (30) is reduced while the refrigerant passes through the thermal-storage-side expansion valve (34), and then the refrigerant flows into the thermal-storage-side heat exchanger (31). The refrigerant flowing through the thermal-storage-side heat exchanger (31) is evaporated by absorbing heat from water of the thermal storage tank (91). The refrigerant flowing out from the thermal-storage-side heat exchanger (31) is sucked into the compressor (16) through the four-way valve (17). The compressor (16) compresses the sucked refrigerant, and discharges the compressed refrigerant.

In the third cold-storage operation, the hot water supplier (70) performs the operation for heating water of the hot water storage tank (71). The operation performed by the hot water supplier (70) in the third cold-storage operation is the same as that performed by the hot water supplier (70) in the first cold-storage operation.

In the third cold-storage operation, the thermal storage (90) performs the operation for storing cold thermal energy in the thermal storage tank (91). Such an operation is the same as that performed by the thermal storage (90) in the first cold-storage operation.

### <First Cold-Used Air-Cooling Operation>

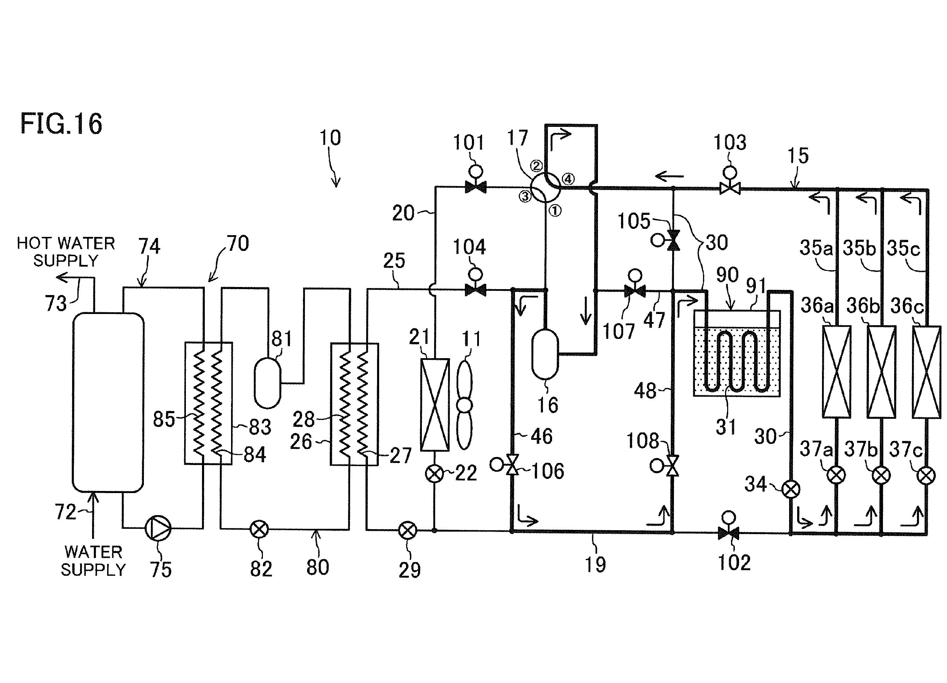

A first cold-used air-cooling operation will be described with reference to FIG. 16. As in the first embodiment, only cold thermal energy stored in the thermal storage tank (91) is used to cool room air in the first cold-used air-cooling operation. In the first cold-used air-cooling operation, the hot water supplier (70) is stopped. Moreover, in the first cold-used air-cooling operation, the outdoor fan (11) is stopped, and each indoor fan is operated.

During the first cold-used air-cooling operation, in the refrigerant circuit (15), the compressor (16) is operated as a gas pump, and refrigerant circulates between the thermal-storage-side heat exchanger (31) and each utilization-side heat exchanger (36a-36c). In the refrigerant circuit (15), the compressor (16) is operated, and the four-way valve (17) is set to the first state. The thermal-storage-side expansion valve (34) is held in a fully-open state, and the heat-source-side expansion valve (22) and the hot-water-supply-side expansion valve (29) are held in a fully-closed state. The opening degree of each utilization-side expansion valve (37a-37c) is adjusted such that the superheat degree of refrigerant at an outlet of a corresponding one of the utilization-side heat exchangers (36a-36c) reaches a predetermined target value. The third solenoid valve (103), the sixth solenoid valve (106), and the eighth solenoid valve (108) are in an open state, whereas the first solenoid valve (101), the second solenoid valve (102), the fourth solenoid valve (104), the fifth solenoid valve (105), and the seventh solenoid valve (107) are in a closed state.

A flow of refrigerant in the refrigerant circuit (15) will be described. Refrigerant discharged from the compressor (16) passes through the first connection pipe (46) and the third connection pipe (48) in this order, and then flows into the thermal-storage-side pipe (30). Then, the refrigerant flows into the thermal-storage-side heat exchanger (31), and then is condensed by dissipating heat to water of the thermal storage tank (91). The refrigerant flowing out from the thermal-storage-side heat exchanger (31) flows so as to branch into the utilization-side pipes (35a-35c). In each utilization-side pipe (35a-35c), the pressure of the refrigerant is reduced while the refrigerant passes through a corresponding one of the utilization-side expansion valves (37a-37c), and then the refrigerant flows into a corresponding one of the utilization-side heat exchangers (36a-36c). Then, the refrigerant is evaporated by absorbing heat from room air. The room air cooled in each utilization-side heat exchanger (36a-36c) is supplied to the inside of the room. After flows of the refrigerant from the utilization-side pipes (35a-35c) are joined together, the refrigerant is sucked into the compressor (16) through the four-way valve (17). The compressor (16) operated as the gas pump increases the pressure of the sucked refrigerant, and then discharges such refrigerant.

In the first cold-used air-cooling operation, the thermal storage (90) performs the operation for providing cold thermal energy stored in the thermal storage tank (91) to refrigerant of the refrigerant circuit (15). Specifically, refrigerant flowing through the thermal-storage-side heat exchanger (31) is cooled with water of the thermal storage tank (91) during the first cold-used air-cooling operation. In the thermal storage tank (91), the refrigerant heats and melts ice around the thermal-storage-side heat exchanger (31). That is, cold thermal energy stored in the thermal storage tank (91) as latent heat of water is provided to refrigerant flowing through the thermal-storage-side heat exchanger (31).

### <Second Cold-Used Air-Cooling Operation>

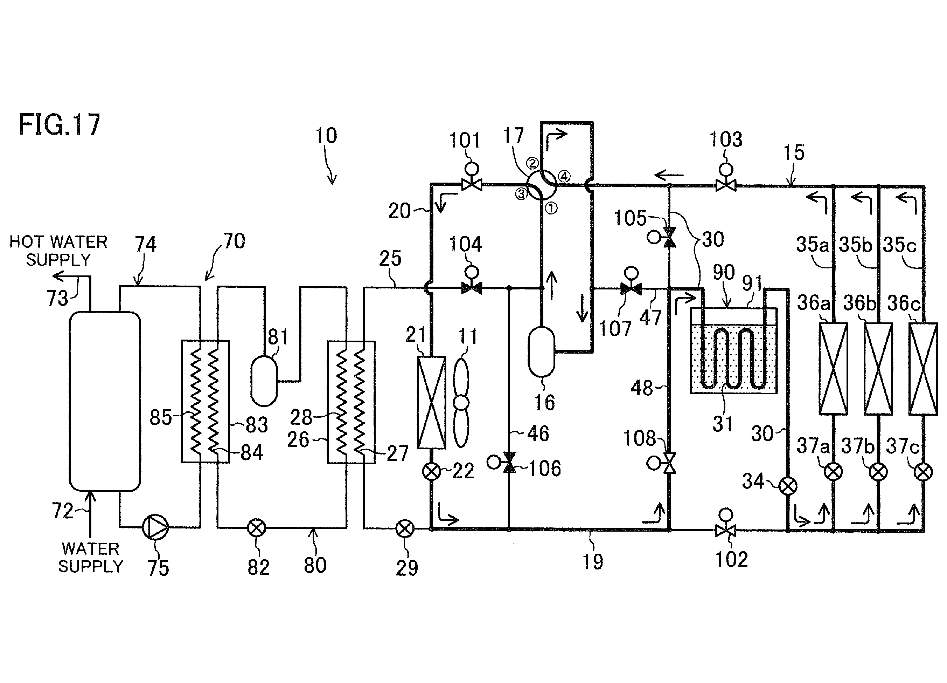

A second cold-used air-cooling operation will be described with reference to FIG. 17. As in the first embodiment, cold thermal energy stored in the thermal storage tank (91) and cold thermal energy obtained by a refrigeration cycle performed by the refrigerant circuit (15) are used to cool room air in the second cold-used air-cooling operation.

The refrigerant circuit (15) performs the refrigeration cycle such that the heat-source-side heat exchanger (21) serves as a condenser (i.e., a radiator), that the thermal-storage-side heat exchanger (31) serves as a sub-cooler (i.e., a radiator), and that each utilization-side heat exchanger (36a-36c) serves as an evaporator. In the refrigerant circuit (15), the compressor (16) is operated, and the four-way valve (17) is set to the first state. The heat-source-side expansion valve (22) and the thermal-storage-side expansion valve (34) are held in a fully-open state, and the hot-water-supply-side expansion valve (29) is held in a fully-closed state. The opening degree of each utilization-side expansion valves (37a-37c) is adjusted such that the superheat degree of refrigerant at the outlet of a corresponding one of the utilization-side heat exchangers (36a-36c) reaches a predetermined target value. The first solenoid valve (101), the third solenoid valve (103), and the eighth solenoid valve (108) are in an open state, whereas the second solenoid valve (102), the fourth solenoid valve (104), the fifth solenoid valve (105), the sixth solenoid valve (106), and the seventh solenoid valve (107) are in a closed state.

A flow of refrigerant in the refrigerant circuit (15) will be described. Refrigerant discharged from the compressor (16) flows into the heat-source-side pipe (20) through the four-way valve (17). The refrigerant flowing into the heat-source-side pipe (20) is condensed by dissipating heat to outdoor air while passing through the heat-source-side heat exchanger (21). Then, the refrigerant flows into the thermal-storage-side pipe (30) through the third connection pipe (48). Subsequently, the refrigerant flows into the thermal-storage-side heat exchanger (31), and then enters a sub-cooling state by dissipating heat to water of the thermal storage tank (91). The refrigerant flowing out from the thermal-storage-side heat exchanger (31) flows so as to branch into the utilization-side pipes (35a-35c). In each utilization-side pipe (35a-35c), the pressure of the refrigerant is reduced while the refrigerant passes through a corresponding one of the utilization-side expansion valves (37a-37c), and the refrigerant flows into a corresponding one of the utilization-side heat exchangers (36a-36c). Then, the refrigerant is evaporated by absorbing heat from room air. The room air cooled in each utilization-side heat exchanger (36a-36c) is supplied to the inside of the room. After flows of the refrigerant from the utilization-side pipes (35a-35c) are joined together, the refrigerant is sucked into the compressor (16) through the four-way valve (17). The compressor (16) compresses the sucked refrigerant, and discharges the compressed refrigerant.

In the second cold-used air-cooling operation, the thermal storage (90) performs the operation for providing cold thermal energy stored in the thermal storage tank (91) to refrigerant of the refrigerant circuit (15). Such an operation is the same as that performed by the thermal storage (90) in the first cold-used air-cooling operation.

### <Water-Heating Cold-Used Air-Cooling Operation>

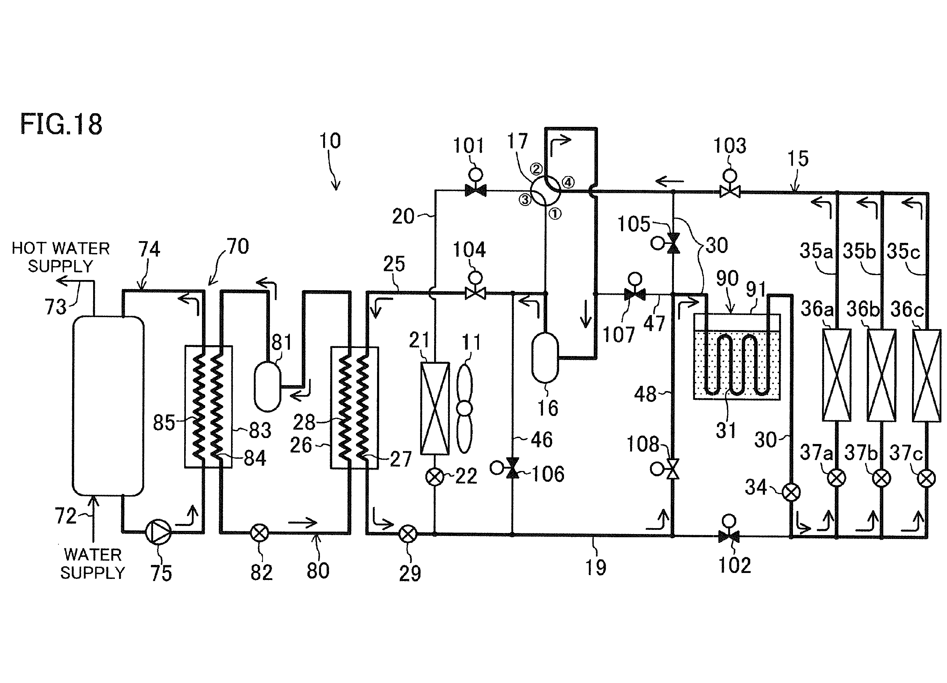

A water-heating cold-used air-cooling operation will be described with reference to FIG. 18. In the water-heating cold-used air-cooling operation, cold thermal energy stored in the thermal storage tank (91) and cold thermal energy obtained by a refrigeration cycle performed by the refrigerant circuit (15) are used to cool room air. Moreover, the hot water supplier (70) performs the operation for heating water of the hot water storage tank (71).

The refrigerant circuit (15) performs the refrigeration cycle such that the hot-water-supply-side heat exchanger (26) serves as a condenser (i.e., a radiator), that the thermal-storage-side heat exchanger (31) serves as a sub-cooler (i.e., a radiator), and that each utilization-side heat exchanger (36a-36c) serves as an evaporator. In the refrigerant circuit (15), the compressor (16) is operated, and the four-way valve (17) is set to the first state. The hot-water-supply-side expansion valve (29) and the thermal-storage-side expansion valve (34) are held in a fully-open state, and the heat-source-side expansion valve (22) is held in a fully-closed state. The opening degree of each utilization-side expansion valve (37a-37c) is adjusted such that the superheat degree of refrigerant at the outlet of a corresponding one of the utilization-side heat exchangers (36a-36c) reaches a predetermined target value. The third solenoid valve (103), the fourth solenoid valve (104), and the eighth solenoid valve (108) are in an open state, whereas the first solenoid valve (101), the second solenoid valve (102), the fifth solenoid valve (105), the sixth solenoid valve (106), and the seventh solenoid valve (107) are in a closed state.

A flow of refrigerant in the refrigerant circuit (15) will be described. Refrigerant discharged from the compressor (16) flows into the hot-water-supply-side pipe (25). The refrigerant flowing into the hot-water-supply-side pipe (25) is condensed by dissipating heat while passing through each primary flow path (27) of the hot-water-supply-side heat exchanger (26). Then, the refrigerant flows into the thermal-storage-side pipe (30) through the third connection pipe (48). Subsequently, the refrigerant flows into the thermal-storage-side heat exchanger (31), and is condensed by dissipating heat to water of the thermal storage tank (91). The refrigerant flowing out from the thermal-storage-side heat exchanger (31) flows so as to branch into the utilization-side pipes (35a-35c). In each utilization-side pipe (35a-35c), the pressure of the refrigerant is reduced while the refrigerant passes through a corresponding one of the utilization-side expansion valves (37a-37c), and then the refrigerant flows into a corresponding one of the utilization-side heat exchangers (36a-36c). Then, the refrigerant is evaporated by absorbing heat from room air. The room air cooled in each utilization-side heat exchanger (36a-36c) is supplied to the inside of the room. After flows of the refrigerant from the utilization-side pipes (35a-35c) are joined together, the refrigerant is sucked into the compressor (16) through the four-way valve (17). The compressor (16) compresses the sucked refrigerant, and discharges the compressed refrigerant.

In the water-heating cold-used air-cooling operation, the hot water supplier (70) performs the operation for heating water of the hot water storage tank (71). The operation performed by the hot water supplier (70) in the water-heating cold-used air-cooling operation is the same as that performed by the hot water supplier (70) in the first cold-storage operation.

In the water-heating cold-used air-cooling operation, the thermal storage (90) performs the operation for providing cold thermal energy stored in the thermal storage tank (91) to refrigerant of the refrigerant circuit (15). Such an operation is the same as that performed by the thermal storage (90) in the first cold-used air-cooling operation.

### <Simple Air-Cooling Operation>

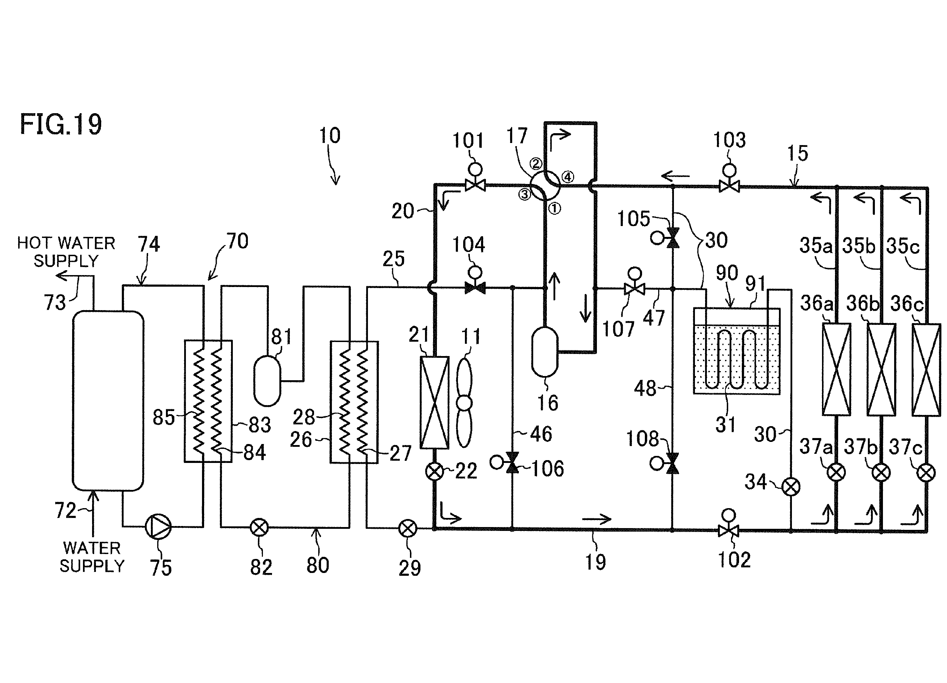

A simple air-cooling operation will be described with reference to FIG. 19. As in the first embodiment, only cold thermal energy obtained by a refrigeration cycle performed by the refrigerant circuit (15) is used to cool room air in the simple air-cooling operation. In the simple air-cooling operation, the hot water supplier (70) and the thermal storage (90) are stopped. Moreover, in the simple air-cooling operation, the outdoor fan (11) and the indoor fan (12) are operated.

The refrigerant circuit (15) performs the refrigeration cycle such that the heat-source-side heat exchanger (21) serves as a condenser (i.e., a radiator) and that each utilization-side heat exchanger (36a-36c) serves as an evaporator. In the refrigerant circuit (15), the compressor (16) is operated, and the four-way valve (17) is set to the first state. The heat-source-side expansion valve (22) is held in the fully-open state, and the hot-water-supply-side expansion valve (29) and the thermal-storage-side expansion valve (34) are held in a fully-closed state. The opening degree of each utilization-side expansion valve (37a-37c) is adjusted such that the superheat degree of refrigerant at the outlet of a corresponding one of the utilization-side heat exchangers (36a-36c) reaches a predetermined target value. The first solenoid valve (101), the second solenoid valve (102), the third solenoid valve (103), and the seventh solenoid valve (107) are in an open state, whereas the fourth solenoid valve (104), the fifth solenoid valve (105), the sixth solenoid valve (106), and the eighth solenoid valve (108) are in a closed state.

A flow of refrigerant in the refrigerant circuit (15) will be described. Refrigerant discharged from the compressor (16) flows into the heat-source-side pipe (20) through the four-way valve (17). The refrigerant flowing into the heat-source-side pipe (20) is condensed by dissipating heat to outdoor air while passing through the heat-source-side heat exchanger (21). Then, the refrigerant flows so as to branch into the utilization-side pipes (35a-35c). In each utilization-side pipe (35a-35c), the pressure of the refrigerant is reduced while the refrigerant passes through a corresponding one of the utilization-side expansion valves (37a-37c), and then the refrigerant flows into a corresponding one of the utilization-side heat exchangers (36a-36c). Then, the refrigerant is evaporated by absorbing heat from room air. The room air cooled in each utilization-side heat exchanger (36a-36c) is supplied to the inside of the room. After flows of the refrigerant from the utilization-side pipes (35a-35c) are joined together, the refrigerant is sucked into the compressor (16) through the four-way valve (17). The compressor (16) compresses the sucked refrigerant, and discharges the compressed refrigerant.

### <Water-Heating Air-Cooling Operation>

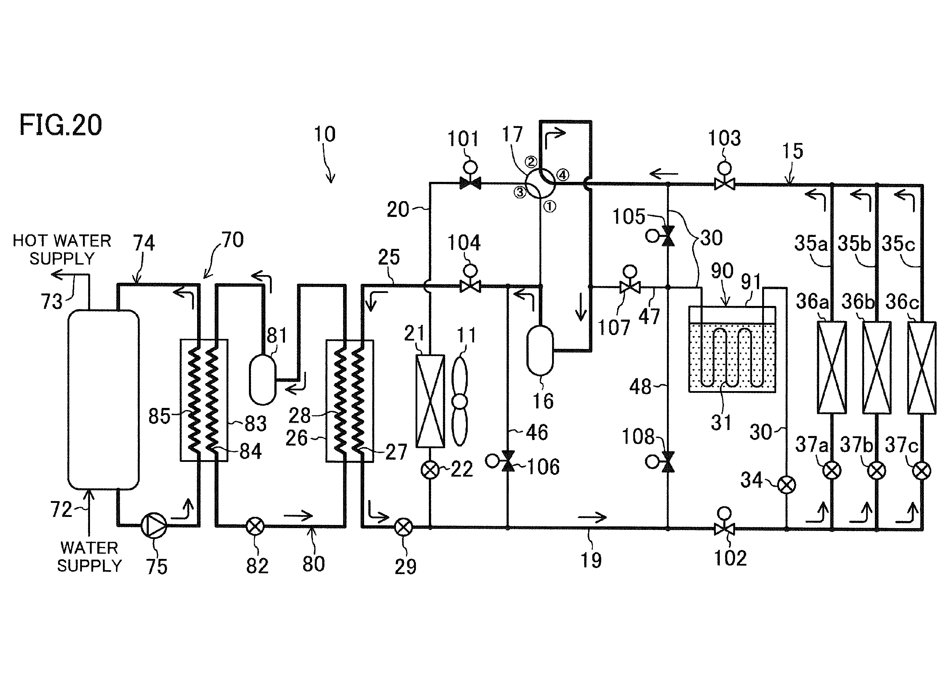

A water-heating air-cooling operation will be described with reference to FIG. 20. In the hot water supply air conditioning system (10), the hot water supplier (70) performs the operation for heating water of the hot water storage tank (71), and cold thermal energy obtained by the operation of the hot water supplier (70) is used to cool room air. In the water-heating air-cooling operation, the thermal storage (90) is stopped. Moreover, in the water-heating air-cooling operation, the outdoor fan (11) is stopped, and each indoor fan is operated.

The refrigerant circuit (15) performs a refrigeration cycle such that the hot-water-supply-side heat exchanger (26) serves as a condenser (i.e., a radiator) and that each utilization-side heat exchanger (36a-36c) serves as an evaporator. In the refrigerant circuit (15), the compressor (16) is operated, and the four-way valve (17) is set to the first state. The hot-water-supply-side expansion valve (29) is held in the fully-open state, and the heat-source-side expansion valve (22) and the thermal-storage-side expansion valve (34) are held in a fully-closed state. The opening degree of each utilization-side expansion valve (37a-37c) is adjusted such that the superheat degree of refrigerant at the outlet of a corresponding one of the utilization-side heat exchangers (36a-36c) reaches a predetermined target value. The second solenoid valve (102), the third solenoid valve (103), the fourth solenoid valve (104), and the seventh solenoid valve (107) are in an open state, whereas the first solenoid valve (101), the fifth solenoid valve (105), the sixth solenoid valve (106), and the eighth solenoid valve (108) are in a closed state.

A flow of refrigerant in the refrigerant circuit (15) will be described. Refrigerant discharged from the compressor (16) flows into the hot-water-supply-side pipe (25). The refrigerant flowing into the hot-water-supply-side pipe (25) is condensed by dissipating heat while passing through each primary flow path (27) of the hot-water-supply-side heat exchanger (26). Then, the refrigerant flows so as to branch into the utilization-side pipes (35a-35c). In each utilization-side pipe (35a-35c), the pressure of the refrigerant is reduced while the refrigerant passes through a corresponding one of the utilization-side expansion valves (37a-37c), and then the refrigerant flows into a corresponding one of the utilization-side heat exchangers (36a-36c). Then, the refrigerant is evaporated by absorbing heat from room air. The room air cooled in each utilization-side heat exchanger (36a-36c) is supplied to the inside of the room. After flows of the refrigerant from the utilization-side pipes (35a-35c) are joined together, the refrigerant is sucked into the compressor (16) through the four-way valve (17). The compressor (16) compresses the sucked refrigerant, and discharges the compressed refrigerant.

In the water-heating air-cooling operation, the hot water supplier (70) performs the operation for heating water of the hot water storage tank (71). The operation performed by the hot water supplier (70) in the water-heating air-cooling operation is the same as that performed by the hot water supplier (70) in the first cold-storage operation.

### <Simple Water-Heating Operation>

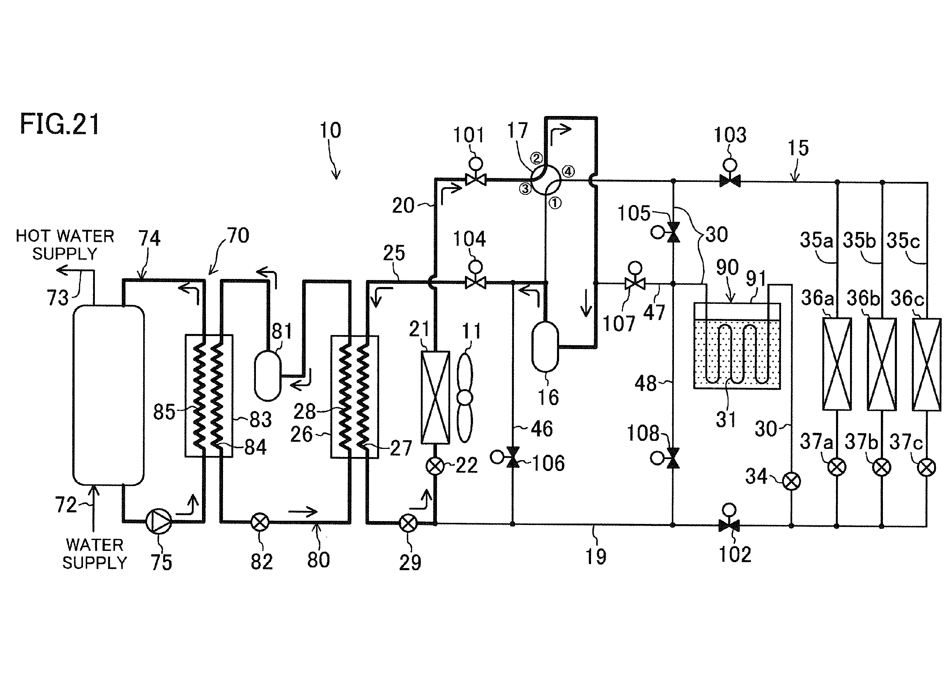

A simple water-heating operation will be described with reference to FIG. 21. In the hot water supply air conditioning system (10), the hot water supplier (70) performs the operation for heating water of the hot water storage tank (71), and the thermal storage (90) is stopped. Moreover, in the hot water supply air conditioning system (10), the outdoor fan (11) is operated, and each indoor fan is stopped.

The refrigerant circuit (15) performs a refrigeration cycle such that the hot-water-supply-side heat exchanger (26) serves as a condenser (i.e., a radiator) and that the heat-source-side heat exchanger (21) serves as an evaporator. In the refrigerant circuit (15), the compressor (16) is operated, and the four-way valve (17) is set to a second state. The hot-water-supply-side expansion valve (29) is held in the fully-open state. The thermal-storage-side expansion valve (34) and each utilization-side expansion valve (37a-37c) may be closed or opened. The opening degree of the heat-source-side expansion valve (22) is adjusted such that the superheat degree of refrigerant at an outlet of the heat-source-side heat exchanger (21) reaches a predetermined target value. The first solenoid valve (101), the fourth solenoid valve (104), and the seventh solenoid valve (107) are in an open state, whereas the second solenoid valve (102), the third solenoid valve (103), the fifth solenoid valve (105), the sixth solenoid valve (106), and the eighth solenoid valve (108) are in a closed state.

A flow of refrigerant in the refrigerant circuit (15) will be described. Refrigerant discharged from the compressor (16) flows into the hot-water-supply-side pipe (25). The refrigerant flowing into the hot-water-supply-side pipe (25) is condensed by dissipating heat while passing through each primary flow path (27) of the hot-water-supply-side heat exchanger (26). The pressure of the refrigerant flowing out from the hot-water-supply-side pipe (25) is reduced while the refrigerant passing through the heat-source-side expansion valve (22). Then, the refrigerant flows into the heat-source-side heat exchanger (21), and is evaporated by absorbing heat from outdoor air. The refrigerant flowing out from the heat-source-side heat exchanger (21) is sucked into the compressor (16) through the four-way valve (17). The compressor (16) compresses the sucked refrigerant, and discharges the compressed refrigerant.

In the simple water-heating operation, the hot water supplier (70) performs the operation for heating water of the hot water storage tank (71). The operation performed by the hot water supplier (70) in the simple water-heating operation is the same as that performed by the hot water supplier (70) in the first cold-storage operation.

### <Water-Heating Heat-Storage Operation>

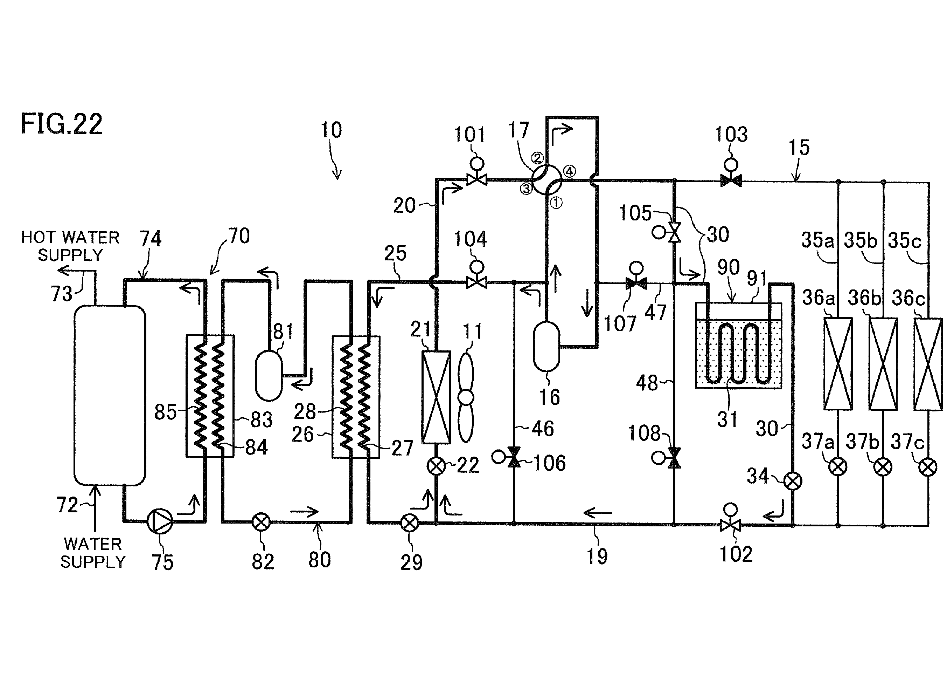

A water-heating heat-storage operation will be described with reference to FIG. 22. In the hot water supply air conditioning system (10), the hot water supplier (70) performs the operation for heating water of the hot water storage tank (71), and the thermal storage (90) performs the operation for storing hot thermal energy. Moreover, in the hot water supply air conditioning system (10), the outdoor fan (11) is operated, and each indoor fan is stopped.

The refrigerant circuit (15) performs a refrigeration cycle such that both of the hot-water-supply-side heat exchanger (26) and the thermal-storage-side heat exchanger (31) serve as condensers (i.e., radiators) and that the heat-source-side heat exchanger (21) serves as an evaporator. In the refrigerant circuit (15), the compressor (16) is operated, and the four-way valve (17) is set to the second state. The hot-water-supply-side expansion valve (29) and the thermal-storage-side expansion valve (34) are held in the fully-open state, and each utilization-side expansion valve (37a-37c) is held in the fully-closed state. The opening degree of the heat-source-side expansion valve (22) is adjusted such that the superheat degree of refrigerant at the outlet of the heat-source-side heat exchanger (21) reaches a predetermined target value. The first solenoid valve (101), the second solenoid valve (102), the fourth solenoid valve (104), and the fifth solenoid valve (105) are in an open state, whereas the third solenoid valve (103), the sixth solenoid valve (106), the seventh solenoid valve (107), and the eighth solenoid valve (108) are in a closed state.

A flow of refrigerant in the refrigerant circuit (15) will be described. Part of refrigerant discharged from the compressor (16) flows into the hot-water-supply-side pipe (25), and the remaining part of the refrigerant flows into the thermal-storage-side pipe (30) through the four-way valve (17). The refrigerant flowing into the hot-water-supply-side pipe (25) is condensed by dissipating heat while passing through each primary flow path (27) of the hot-water-supply-side heat exchanger (26). Meanwhile, the refrigerant flowing into the thermal-storage-side pipe (30) flows into the thermal-storage-side heat exchanger (31), and is condensed by dissipating heat to water of the thermal storage tank (91). After the refrigerant flowing out from the hot-water-supply-side pipe (25) and the refrigerant flowing out from the thermal-storage-side pipe (30) are joined together, the pressure of the refrigerant is reduced while the refrigerant passes through the heat-source-side expansion valve (22). Then, the refrigerant flows into the heat-source-side heat exchanger (21), and is evaporated by absorbing heat from outdoor air. The refrigerant flowing out from the heat-source-side heat exchanger (21) is sucked into the compressor (16) through the four-way valve (17). The compressor (16) compresses the sucked refrigerant, and discharges the compressed refrigerant.

In the water-heating heat-storage operation, the hot water supplier (70) performs the operation for heating water of the hot water storage tank (71). The operation performed by the hot water supplier (70) in the water-heating heat-storage operation is the same as that performed by the hot water supplier (70) in the first cold-storage operation.

In the water-heating heat-storage operation, water of the thermal storage tank (91) is heated with refrigerant flowing through the thermal-storage-side heat exchanger (31). As a result, hot thermal energy is stored in the thermal storage tank (91).

### <Simple Heat-Storage Operation>

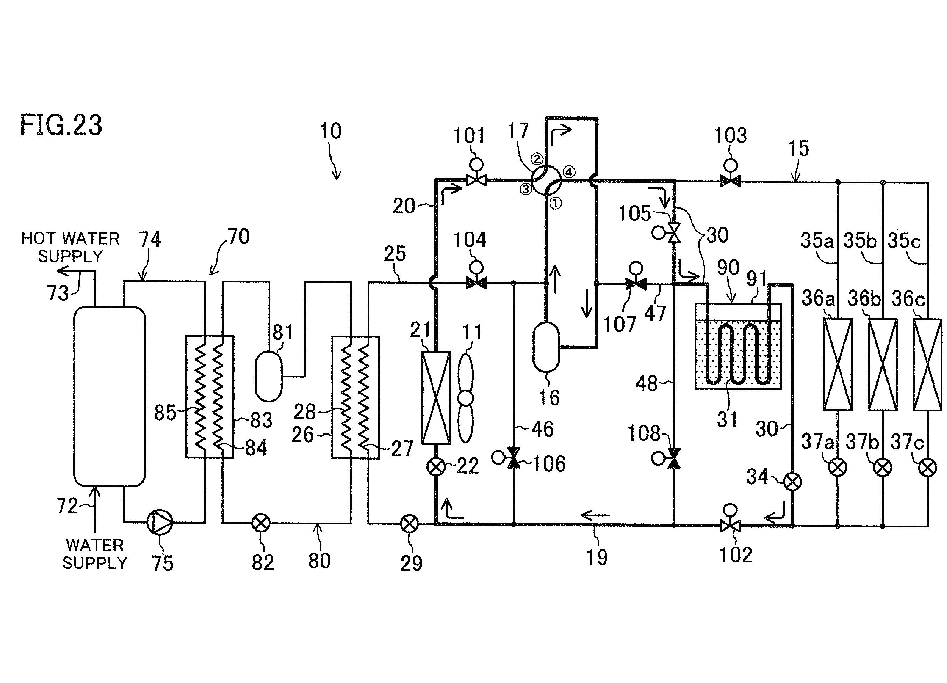

A simple heat-storage operation will be described with reference to FIG. 23. In the hot water supply air conditioning system (10), the thermal storage (90) performs the operation for storing hot thermal energy, and the hot water supplier (70) is stopped. Moreover, in the hot water supply air conditioning system (10), the outdoor fan (11) is operated, and each indoor fan is stopped.

The refrigerant circuit (15) performs a refrigeration cycle such that the thermal-storage-side heat exchanger (31) serves as a condenser (i.e., a radiator) and that the heat-source-side heat exchanger (21) serves as an evaporator. In the refrigerant circuit (15), the compressor (16) is operated, and the four-way valve (17) is set to the second state. The thermal-storage-side expansion valve (34) is held in the fully-open state, and the hot-water-supply-side expansion valve (29) and each utilization-side expansion valve (37a-37c) are held in the fully-closed state. The opening degree of the heat-source-side expansion valve (22) is adjusted such that the superheat degree of refrigerant at the outlet of the heat-source-side heat exchanger (21) reaches a predetermined target value. The first solenoid valve (101), the second solenoid valve (102), and the fifth solenoid valve (105) are in an open state, whereas the third solenoid valve (103), the fourth solenoid valve (104), the sixth solenoid valve (106), the seventh solenoid valve (107), and the eighth solenoid valve (108) are in a closed state.

A flow of refrigerant in the refrigerant circuit (15) will be described. Refrigerant discharged from the compressor (16) flows into the thermal-storage-side pipe (30) through the four-way valve (17). The refrigerant flowing into the thermal-storage-side pipe (30) flows into the thermal-storage-side heat exchanger (31), and is condensed by dissipating heat to water of the thermal storage tank (91). The pressure of the refrigerant flowing out from the thermal-storage-side pipe (30) is reduced while the refrigerant passes through the heat-source-side expansion valve (22). Then, the refrigerant flows into the heat-source-side heat exchanger (21), and is evaporated by absorbing heat from outdoor air. The refrigerant flowing out from the heat-source-side heat exchanger (21) is sucked into the compressor (16) through the four-way valve (17). The compressor (16) compresses the sucked refrigerant, and discharges the compressed refrigerant.

In the simple heat-storage operation, water of the thermal storage tank (91) is heated with refrigerant flowing through the thermal-storage-side heat exchanger (31). As a result, hot thermal energy is stored in the thermal storage tank (91).

### <Heat-Used Air-Heating Operation>

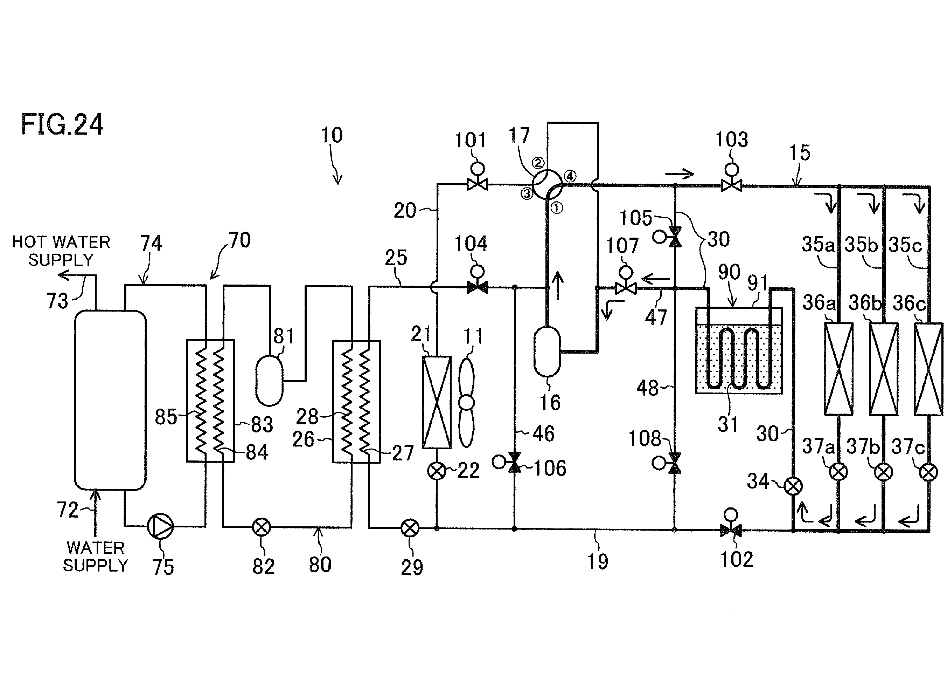

A heat-used air-heating operation will be described with reference to FIG. 24. In the heat-used air-heating operation, only hot thermal energy stored in the thermal storage tank (91) is used to heat room air. In the hot water supply air conditioning system (10), the hot water supplier (70) is stopped. Moreover, in the hot water supply air conditioning system (10), the outdoor fan (11) is stopped, and each indoor fan is operated.

The refrigerant circuit (15) performs a refrigeration cycle such that each utilization-side heat exchanger (36a-36c) serves as a condenser (i.e., a radiator) and that the thermal-storage-side heat exchanger (31) serves as an evaporator. In the refrigerant circuit (15), the compressor (16) is operated, and the four-way valve (17) is set to the second state. The heat-source-side expansion valve (22) and the hot-water-supply-side expansion valve (29) are held in the fully-open state. The opening degree of each utilization-side expansion valve (37a-37c) is adjusted such that the sub-cooling degree of refrigerant at the outlet of a corresponding one of the utilization-side heat exchangers (36a-36c) reaches a predetermined target value. The opening degree of the thermal-storage-side expansion valve (34) is adjusted such that the superheat degree of refrigerant at an outlet of the thermal-storage-side heat exchanger (31) reaches a predetermined target value. The first solenoid valve (101), the third solenoid valve (103), and the seventh solenoid valve (107) are in an open state, whereas the second solenoid valve (102), the fourth solenoid valve (104), the fifth solenoid valve (105), the sixth solenoid valve (106), and the eighth solenoid valve (108) are in a closed state.

A flow of refrigerant in the refrigerant circuit (15) will be described. Refrigerant discharged from the compressor (16) passes through the four-way valve (17), and then flows so as to branch into the utilization-side pipes (35a-35c). In each utilization-side pipe (35a-35c), the refrigerant flows into a corresponding one of the utilization-side heat exchangers (36a-36c), and is condensed by dissipating heat to room air. The room air heated in each utilization-side heat exchanger (36a-36c) is supplied to the inside of the room. After flows of the refrigerant flowing out from the utilization-side pipes (35a-35c) are joined together, the pressure of the refrigerant is reduced while the refrigerant passes through the thermal-storage-side expansion valve (34). The depressurized refrigerant flows into the thermal-storage-side heat exchanger (31), and is evaporated by absorbing heat from water of the thermal storage tank (91). The refrigerant flowing out from the thermal-storage-side heat exchanger (31) is sucked into the compressor (16) through the second connection pipe (47). The compressor (16) compresses the sucked refrigerant, and discharges the compressed refrigerant.

In the heat-used air-heating operation, refrigerant flowing through the thermal-storage-side heat exchanger (31) absorbs heat from water of the thermal storage tank (91). That is, hot thermal energy stored in the thermal storage tank (91) is provided to refrigerant flowing through the thermal-storage-side heat exchanger (31).

### <Simple Air-Heating Operation>

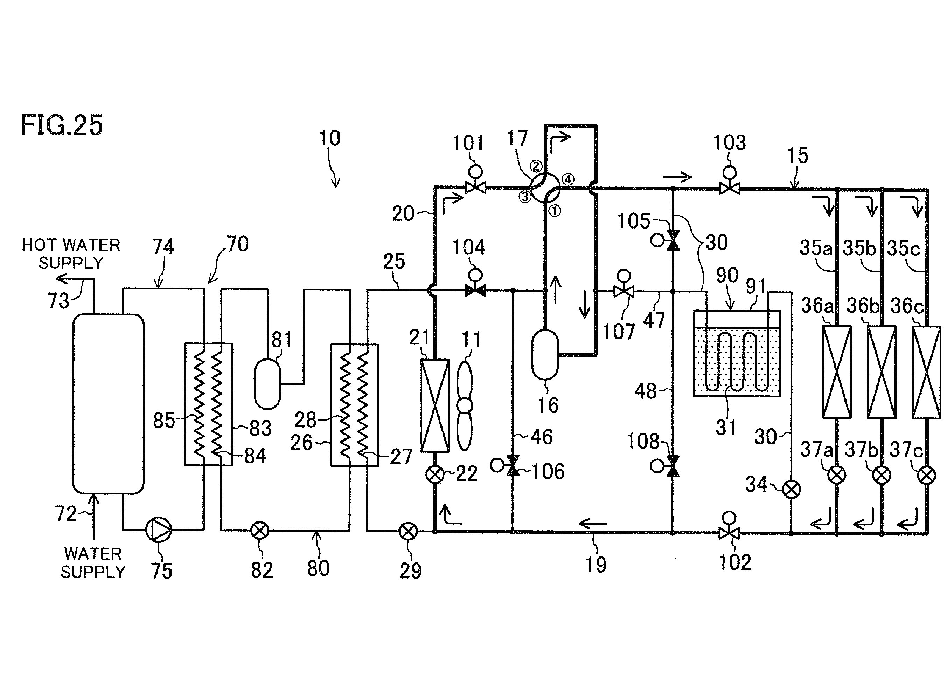

A simple air-heating operation will be described with reference to FIG. 25. As in the first embodiment, only hot thermal energy obtained by a refrigeration cycle performed by the refrigerant circuit (15) is used to heat room air in the simple air-heating operation. In the hot water supply air conditioning system (10), the hot water supplier (70) and the thermal storage (90) are stopped. Moreover, in the hot water supply air conditioning system (10), the outdoor fan (11) and each indoor fan are operated.

The refrigerant circuit (15) performs the refrigeration cycle such that each utilization-side heat exchanger (36a-36c) serves as a condenser (i.e., a radiator) and that the heat-source-side heat exchanger (21) serves as an evaporator. In the refrigerant circuit (15), the compressor (16) is operated, and the four-way valve (17) is set to the second state. The hot-water-supply-side expansion valve (29) and the thermal-storage-side expansion valve (34) are held in the fully-closed state. The opening degree of each utilization-side expansion valve (37a-37c) is adjusted such that the sub-cooling degree of refrigerant at the outlet of a corresponding one of the utilization-side heat exchangers (36a-36c) reaches a predetermined target value. The opening degree of the heat-source-side expansion valve (22) is adjusted such that the superheat degree of refrigerant at the outlet of the heat-source-side heat exchanger (21) reaches a predetermined target value. The first solenoid valve (101), the second solenoid valve (102), the third solenoid valve (103), and the seventh solenoid valve (107) are in an open state, whereas the fourth solenoid valve (104), the fifth solenoid valve (105), the sixth solenoid valve (106), and the eighth solenoid valve (108) are in a closed state.

A flow of refrigerant in the refrigerant circuit (15) will be described. Refrigerant discharged from the compressor (16) passes through the four-way valve (17), and then flows so as to branch into the utilization-side pipes (35a-35c). In each utilization-side pipe (35a-35c), the refrigerant flows into a corresponding one of the utilization-side heat exchangers (36a-36c), and is condensed by dissipating heat to room air. The room air heated in each utilization-side heat exchanger (36a-36c) is supplied to the inside of the room. After flows of the refrigerant flowing out from the utilization-side pipes (35a-35c) are joined together, the pressure of the refrigerant is reduced while the refrigerant passes through the heat-source-side expansion valve (22). Then, the refrigerant flows into the heat-source-side heat exchanger (21), and is evaporated by absorbing heat from outdoor air. The refrigerant flowing out from the heat-source-side heat exchanger (21) is sucked into the compressor (16) through the four-way valve (17). The compressor (16) compresses the sucked refrigerant, and discharges the compressed refrigerant.

### <Water-Heating Air-Heating Operation>

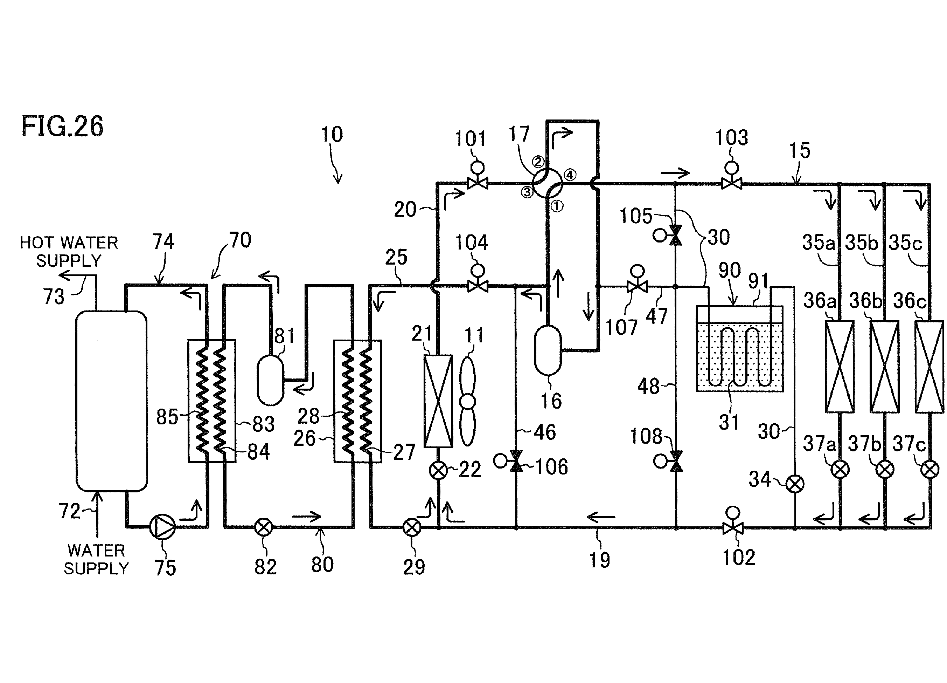

A water-heating air-heating operation will be described with reference to FIG. 26. In the water-heating air-heating operation, only hot thermal energy obtained by a refrigeration cycle performed by the refrigerant circuit (15) is used to heat room air. In the hot water supply air conditioning system (10), the hot water supplier (70) performs the operation for heating water of the hot water storage tank (71), and the thermal storage (90) is stopped. Moreover, in the hot water supply air conditioning system (10), the outdoor fan (11) and each indoor fan is operated.

The refrigerant circuit (15) performs the refrigeration cycle such that the hot-water-supply-side heat exchanger (26) and each utilization-side heat exchanger (36a-36c) serve as condensers (i.e., radiators) and that the heat-source-side heat exchanger (21) serves as an evaporator. In the refrigerant circuit (15), the compressor (16) is operated, and the four-way valve (17) is set to the second state. The thermal-storage-side expansion valve (34) is held in a fully-closed state. The opening degree of each utilization-side expansion valve (37a-37c) is adjusted such that the sub-cooling degree of refrigerant at the outlet of a corresponding one of the utilization-side heat exchangers (36a-36c) reaches a predetermined target value. The opening degree of the hot-water-supply-side expansion valve (29) is adjusted such that the sub-cooling degree of refrigerant at an outlet of each primary flow path (27) of the hot-water-supply-side heat exchanger (26) reaches a predetermined target value. The opening degree of the heat-source-side expansion valve (22) is adjusted such that the superheat degree of refrigerant at the outlet of the heat-source-side heat exchanger (21) reaches a predetermined target value. The first solenoid valve (101), the second solenoid valve (102), the third solenoid valve (103), the fourth solenoid valve (104), whereas the seventh solenoid valve (107) are in an open state, and the fifth solenoid valve (105), the sixth solenoid valve (106), and the eighth solenoid valve (108) are in a closed state.

A flow of refrigerant in the refrigerant circuit (15) will be described. Part of refrigerant discharged from the compressor (16) flows into the hot-water-supply-side pipe (25). The remaining part of the refrigerant passes through the four-way valve (17), and then flows so as to branch into the utilization-side pipes (35a-35c). The refrigerant flowing into the hot-water-supply-side pipe (25) is condensed by dissipating heat while passing through each primary flow path (27) of the hot-water-supply-side heat exchanger (26). Meanwhile, the refrigerant flowing into each utilization-side pipe (35a-35c) flows into a corresponding one of the utilization-side heat exchangers (36a-36c), and is condensed by dissipating heat to room air. The room air heated in each utilization-side heat exchanger (36a-36c) is supplied to the inside of the room. The refrigerant flowing out from the hot-water-supply-side pipe (25) and the refrigerant flowing out from each utilization-side pipe (35a-35c) are joined together. Then, the pressure of the refrigerant is reduced while the refrigerant passes through the heat-source-side expansion valve (22). The depressurized refrigerant flows into the heat-source-side heat exchanger (21), and is evaporated by absorbing heat from outdoor air. The refrigerant flowing out from the heat-source-side heat exchanger (21) is sucked into the compressor (16) through the four-way valve (17). The compressor (16) compresses the sucked refrigerant, and discharges the compressed refrigerant.

In the water-heating air-heating operation, the hot water supplier (70) performs the operation for heating water of the hot water storage tank (71). The operation performed by the hot water supplier (70) in the water-heating air-heating operation is the same as that performed by the hot water supplier (70) in the first cold-storage operation.

### <Heat-Used Defrosting Operation>

A heat-used defrosting operation will be described. In the heat-used defrosting operation, the hot water supply air conditioning system (10) performs the same operation as the second cold-storage operation illustrated in FIG. 14. Unlike the second cold-storage operation, the outdoor fan (11) is stopped in the heat-used defrosting operation. The heat-used defrosting operation is for melting, with hot thermal energy stored in the thermal storage tank (91), frost adhering to the heat-source-side heat exchanger (21) during the simple water-heating operation, the simple air-heating operation, or the water-heating air-heating operation.

In the refrigerant circuit (15), refrigerant discharged from the compressor (16) flows into the heat-source-side heat exchanger (21), and dissipates heat. As a result, frost adhering to the heat-source-side heat exchanger (21) is melted. The pressure of the refrigerant condensed in the heat-source-side heat exchanger (21) is reduced while the refrigerant passes through the thermal-storage-side expansion valve (34). Then, the refrigerant flows into the thermal-storage-side heat exchanger (31), and is evaporated by absorbing heat from water of the thermal storage tank (91). The refrigerant flowing out from the thermal-storage-side heat exchanger (31) is sucked into the compressor (16), and is compressed.

### <Operations in Season Requiring Air-Cooling>

In the season requiring air-cooling, such as the summer season, the hot water supply air conditioning system (10) of the present embodiment performs the first to third cold-storage operations, the first and second cold-used air-cooling operations, the water-heating cold-used air-cooling operation, the simple air-cooling operation, and the water-heating air-cooling operation.

The first to third cold-storage operations are performed during the midnight during which the cost for electricity is low. On the other hand, the first and second cold-used air-cooling operations, the water-heating cold-used air-cooling operation, the simple air-cooling operation, and the water-heating air-cooling operation are mainly performed from the daytime to the late afternoon.

In the air-cooling season, the hot water supply air conditioning system (10) inevitably performs at least one of the first or third cold-storage operation. As described above, during the first and third cold-storage operations, in the hot water supply air conditioning system (10), the refrigerant circuit (15) performs the refrigeration cycle, the hot water supplier (70) heats water of the hot water storage tank (71), and cold thermal energy obtained by the refrigeration cycle performed by the refrigerant circuit (15) is stored in the thermal storage tank (91) of the thermal storage (90). The first cold-storage operation is performed when it is expected that, e.g., the demand for hot water supply in the following day is relatively high. On the other hand, the third cold-storage operation is performed when it is expected that, e.g., the demand for hot water supply in the following day is relatively low.

When the temperature of almost all of water of the hot water storage tank (71) reaches a high temperature of about 80°C to 90 °C, or the amount of high-temperature water of the hot water storage tank (71) reaches the amount covering the amount of hot water required for the following day, the first or third cold-storage operation is terminated. During the summer season during which the demand for hot water supply is relatively low and an air cooling load is high, it is often the case that the air cooling load during the day cannot be completely processed using only cold thermal energy stored in the thermal storage tank (91) in the first or third cold-storage operation. In such a case, the hot water supply air conditioning system (10) performs the second cold-storage operation after the first or third cold-storage operation is terminated.

During the second cold-storage operation, in the hot water supply air conditioning system (10), refrigerant of the refrigerant circuit (15) absorbs heat from the thermal storage medium, and dissipates the heat to outdoor air as described above. Thus, cold thermal energy can be stored in the thermal storage tank (91) regardless of the amount of high-temperature water of the hot water storage tank (71). The hot water supply air conditioning system (10) of the present embodiment performs these cold-storage operations during the midnight to ensure a sufficient amount of cold thermal energy stored in the thermal storage tank (91).

The first and second cold-used air-cooling operations are for cooling room air using cold thermal energy stored in the thermal storage tank (91) in the first to third cold-storage operations. The power consumption in the hot water supply air conditioning system (10) in the first or second cold-used air-cooling operation is lower than the power consumption in the hot water supply air conditioning system (10) in the simple air-cooling operation for cooling air using only cold thermal energy obtained by the refrigeration cycle performed by the refrigerant circuit (15). Thus, the power consumption in the hot water supply air conditioning system (10) from the daytime to the late afternoon, i.e., during the time during which the cost for electricity is high, decreases, and therefore the running cost for the hot water supply air conditioning system (10) is reduced.

Ever after cold thermal energy stored in the thermal storage tank (91) is completely used, it is sometimes necessary to further cool room air. In such a case, the hot water supply air conditioning system (10) performs the simple air-cooling operation.

When the demand for hot water supply is higher than expected, the amount of high-temperature water of the hot water storage tank (71) may become insufficient during one of the first or second cold-used air-cooling operation or the simple air-cooling operation. In such a case, the hot water supply air conditioning system (10) performs the water-heating cold-used air-cooling operation or the water-heating air-cooling operation.

### <Operations in Season Requiring Air-Heating>

In the season requiring air-heating, such as the winter season, the hot water supply air conditioning system (10) performs the simple water-heating operation, the water-heating heat-storage operation, the simple heat-storage operation, the heat-used air-heating operation, the simple air-heating operation, the water-heating air-heating operation, and the heat-used defrosting operation.

The simple water-heating operation, the water-heating heat-storage operation, and the simple heat-storage operation are performed during the midnight during which the cost for electricity is low. On the other hand, the heat-used air-heating operation, the simple air-heating operation, and the water-heating air-heating operation are mainly performed from the daytime to the late afternoon.

In the air-heating season, the hot water supply air conditioning system (10) inevitably performs at least one of the simple water-heating operation or the water-heating heat-storage operation during the midnight. Moreover, the hot water supply air conditioning system (10) performs the simple heat-storage operation as necessary. That is, the hot water supply air conditioning system (10) performs, during the midnight, the operation for heating water of the hot water storage tank (71) and the operation for storing hot thermal energy in the thermal storage tank (91).

The heat-used air-heating operation is for heating room air using hot thermal energy stored in the thermal storage tank (91) in the water-heating heat-storage operation or the simple heat-storage operation. The power consumption in the hot water supply air conditioning system (10) in the heat-used air-heating operation is lower than the power consumption in the hot water supply air conditioning system (10) in the simple air-heating operation for heating air using only hot thermal energy obtained by the refrigeration cycle performed by the refrigerant circuit (15). Thus, the power consumption in the hot water supply air conditioning system (10) from the daytime to the late afternoon, i.e., during the time during which the cost for electricity is high, decreases, and therefore the running cost for the hot water supply air conditioning system (10) is reduced.

Ever after hot thermal energy stored in the thermal storage tank (91) is completely used, it is sometimes necessary to further heat room air. In such a case, the hot water supply air conditioning system (10) performs the simple air-heating operation.

When the demand for hot water supply is higher than expected, the amount of high-temperature water of the hot water storage tank (71) may become insufficient during the simple air-heating operation. In such a case, the hot water supply air conditioning system (10) performs the water-heating air-heating operation.

During the simple water-heating operation, the simple air-heating operation, or the water-heating air-heating operation, frost may adhere to the heat-source-side heat exchanger (21) serving as the evaporator. In such a case, hot thermal energy sometimes remains in the thermal storage tank (91). In this case, the hot water supply air conditioning system (10) performs the heat-used defrosting operation.

### INDUSTRIAL APPLICABILITY

As described above, the present disclosure is useful for the hot water supply air conditioning system including the hot water supplier, the thermal storage, and the refrigerant circuit.

### DESCRIPTION OF REFERENCE CHARACTERS

- 10: Hot Water Supply Air Conditioning System
- 15: Refrigerant Circuit
- 20: Heat-Source-Side Pipe (Heat-Source-Side Path)
- 21: Heat-Source-Side Heat Exchanger
- 22: Heat-Source-Side Expansion Valve
- 25: Hot-Water-Supply-Side Pipe (Hot-Water-Supply-Side Path)
- 26: Hot-Water-Supply-Side Heat Exchanger
- 29: Hot-Water-Supply-Side Expansion Valve
- 31: Thermal-Storage-Side Heat Exchanger
- 36: Utilization-Side Heat Exchanger
- 41: First Bypass Path (Bypass Path)
- 70: Hot Water Supplier
- 71: Hot Water Storage Tank
- 90: Thermal Storage
- 91: Thermal Storage Tank

## Claims

1. A hot water supply air conditioning system comprising:
a hot water supplier (70) including a hot water storage tank (71) configured to store hot water to be supplied;
a thermal storage (90) including a thermal storage tank (91) configured to store a thermal storage medium; and
a refrigerant circuit (15) including
a hot-water-supply-side heat exchanger (26) connected to the hot water supplier (70),
a thermal-storage-side heat exchanger (31) connected to the thermal storage (90),
a heat-source-side heat exchanger (21) configured to exchange heat between refrigerant and outdoor air, and
a utilization-side heat exchanger (36) configured to condition room air,
wherein the hot water supply air conditioning system performs
a cold-storage operation in which the refrigerant circuit (15) performs a refrigeration cycle such that the thermal-storage-side heat exchanger (31) serves as an evaporator and the thermal storage (90) cools the thermal storage medium of the thermal storage tank (91) with refrigerant flowing through the thermal-storage-side heat exchanger (31), and
a cold-used air-cooling operation in which the refrigerant circuit (15) circulates refrigerant from the thermal-storage-side heat exchanger (31) to the utilization-side heat exchanger (36) and the thermal storage (90) cools refrigerant flowing through the thermal-storage-side heat exchanger (31) with the thermal storage medium of the thermal storage tank (91), and
during the cold-storage operation, the hot water supply air conditioning system performs
a first operation in which the hot-water-supply-side heat exchanger (26) serves as a radiator and the hot water supplier (70) heats the water of the hot water storage tank (71) with heat dissipated from refrigerant, and
a second operation in which the heat-source-side heat exchanger (21) serves as the radiator.

2. The hot water supply air conditioning system of claim 1, wherein
the refrigerant circuit (15) further includes
a hot-water-supply-side path (25) in which the hot-water-supply-side heat exchanger (26) is provided,
a heat-source-side path (20) in which the heat-source-side heat exchanger (21) is provided, and
a bypass path (41) connected to both ends of the hot-water-supply-side path (25) and both ends of the heat-source-side path (20) and being switchable among
a first state in which refrigerant flows through the hot-water-supply-side path (25) and bypasses the heat-source-side path (20),
a second state in which refrigerant bypasses the hot-water-supply-side path (25) and flows through the heat-source-side path (20), and
a third state in which refrigerant bypasses both of the hot-water-supply-side path (25) and the heat-source-side path (20).

3. The hot water supply air conditioning system of claim 2, wherein
the hot-water-supply-side path (25) includes a hot-water-supply-side expansion valve (29) disposed on a liquid side of the hot-water-supply-side heat exchanger (26), and
the heat-source-side path (20) includes a heat-source-side expansion valve (22) disposed on a liquid side of the heat-source-side heat exchanger (21).
